# EUROPEAN PATENT APPLICATION

(11) **EP 4 583 588 A1**
(43) Date of publication of application: **09.07.2025**
(21) Application number: 22956908.2
(22) Date of filing: 31.08.2022
(51) Int. Cl.: H04W 52/02, H04W 76/28, H04W 24/10, H04W 68/00

(54) **WIRELESS COMMUNICATION METHOD AND DEVICE**

(71) Applicant: GUANGDONG OPPO MOBILE TELECOMMUNICATIONS CORP., LTD., Dongguan, Guangdong 523860 (CN)
(72) Inventor: HE, Chuanfeng, Dongguan, Guangdong 523860 (CN); XU, Weijie, Dongguan, Guangdong 523860 (CN); ZUO, Zhisong, Dongguan, Guangdong 523860 (CN)
(74) Representative: RGTH
(86) International application number: PCT/CN2022/116346
(87) International publication number: WO 2024/045082

(57) **Abstract**

Provided in the embodiments of the present application are a wireless communication method and device. A first communication device can determine an RRM measurement state according to a WUR signal or an RLM result, such that the number of RRM measurements to be performed by a primary receiver of the first communication device on a serving cell can be reduced, thereby reducing energy consumption for RRM measurements. The wireless communication method comprises: a first communication device determining an RRM measurement state according to first information, wherein the first information is one of the following: a WUR signal and an RLM result.

## Description

### TECHNICAL FIELD

Embodiments of this application relate to the field of communications, and more specifically, to a wireless communication method and a device.

### BACKGROUND

In a new radio (New Radio, NR) system, energy consumption of RRM measurement may be reduced by using a radio resource management (Radio Resource Management, RRM) measurement relaxation mechanism. However, with evolution of the NR technology, a higher requirement is put forward for energy saving of terminals. How to further reduce energy consumption of RRM measurement becomes a problem that needs to be resolved.

### SUMMARY

Embodiments of this application provide a wireless communication method and a device. A first communications device may determine an RRM measurement state based on a WUR signal or an RLM result, so as to reduce RRM measurement performed by a primary receiver of the first communications device on a serving cell, thereby reducing energy consumption of the RRM measurement.

According to a first aspect, a wireless communication method is provided. The method includes:
determining, by the first communications device, an RRM measurement state based on first information,
where the first information is one of following:
   a WUR signal and an RLM result.

According to a second aspect, a wireless communication method is provided. The method includes:
transmitting, by a second communications device, first indication information,
where the first indication information is used to instruct a first communications device to determine an RRM measurement state based on first information, and the first information is one of following: a WUR signal and an RLM result.

According to a third aspect, a communications device is provided and configured to execute the method in the first aspect.

Specifically, the communications device includes a function module configured to execute the method in the first aspect.

According to a fourth aspect, a communications device is provided and configured to execute the method in the second aspect.

Specifically, the communications device includes a function module configured to execute the method in the second aspect.

According to a fifth aspect, a communications device is provided. The device includes a processor and a memory. The memory is configured to store a computer program, and the processor is configured to invoke and run the computer program stored in the memory to cause the communications device to execute the method in the first aspect.

According to a sixth aspect, a communications device is provided. The device includes a processor and a memory. The memory is configured to store a computer program, and the processor is configured to invoke and run the computer program stored in the memory to cause the communications device to execute the method in the second aspect.

According to a seventh aspect, an apparatus is provided and is configured to implement the method according to any one of the first aspect and the second aspect.

Specifically, the apparatus includes a processor, configured to invoke a computer program from a memory and run the computer program, to cause a device on which the apparatus is installed to execute the method according to any one of the first aspect and the second aspect.

According to an eighth aspect, a computer-readable storage medium is provided and configured to store a computer program. The computer program causes a computer to execute the method according to any one of the first aspect and the second aspect.

According to a ninth aspect, a computer program product is provided. The computer program product includes computer program instructions. The computer program instructions cause a computer to execute the method according to any one of the first aspect and the second aspect.

According to a tenth aspect, a computer program is provided. The computer program, when run on a computer, causes the computer to execute the method according to any one of the first aspect and the second aspect.

Through the foregoing technical solutions, the first communications device may determine an RRM measurement state based on a WUR signal or an RLM result, so as to reduce RRM measurement performed by a primary receiver of the first communications device on a serving cell, thereby reducing energy consumption of the RRM measurement.

### BRIEF DESCRIPTION OF DRAWINGS

FIG. 1 is a schematic diagram of a communications system architecture to which an embodiment of this application is applied.
FIG. 2 is a diagram of a system of a receiver based on zero-power wake up according to this application.
FIG. 3 is a schematic diagram of OOK modulation of a WUR synchronization sequence according to this application.
FIG. 4 is a schematic diagram of an MC-OOK signal generated through multi-carrier modulation according to this application.
FIG. 5 is a schematic diagram of SMTC according to this application.
FIG. 6 is a schematic diagram of a low-mobility determination rule according to this application.
FIG. 7 is a schematic flowchart of a wireless communication method according to an embodiment of this application.
FIG. 8 is a schematic diagram of RRM measurement state switching according to an embodiment of this application.
FIG. 9 is a schematic flowchart of another wireless communication method according to an embodiment of this application.
FIG. 10 is a schematic block diagram of a communications device according to an embodiment of this application.
FIG. 11 is a schematic block diagram of another communications device according to an embodiment of this application.
FIG. 12 is a schematic block diagram of still another communications device according to an embodiment of this application.
FIG. 13 is a schematic block diagram of an apparatus according to an embodiment of this application.
FIG. 14 is a schematic block diagram of a communications system according to an embodiment of this application.

### DESCRIPTION OF EMBODIMENTS

The following describes the technical solutions in embodiments of this application with reference to the accompanying drawings in embodiments of this application. Apparently, the described embodiments are some rather than all of embodiments of this application. All other embodiments obtained by a person of ordinary skill in the art based on embodiments of this application without creative efforts shall fall within the protection scope of this application.

The technical solutions in embodiments of this application may be applied to various communications systems, for example, a global system for mobile communications (Global System of Mobile communication, GSM), a code division multiple access (Code Division Multiple Access, CDMA) system, a wideband code division multiple access (Wideband Code Division Multiple Access, WCDMA) system, general packet radio service (General Packet Radio Service, GPRS), a long term evolution (Long Term Evolution, LTE) system, an advanced long term evolution (Advanced long term evolution, LTE-A) system, a new radio (New Radio, NR) system, an evolved system of an NR system, an LTE-based access to unlicensed spectrum (LTE-based access to unlicensed spectrum, LTE-U) system, an NR-based access to unlicensed spectrum (NR-based access to unlicensed spectrum, NR-U) system, a non-terrestrial network (Non-Terrestrial Networks, NTN) system, a universal mobile telecommunications system (Universal Mobile Telecommunications system, UMTS), a wireless local area network (Wireless Local Area Networks, WLAN), internet of things (internet of things, IoT), wireless fidelity (Wireless Fidelity, Wi-Fi), a fifth-generation (5th-Generation, 5G) system, a sixth-generation (6th-Generation, 6G) system, or another communications system.

Generally, a quantity of connections supported by a conventional communications system is limited and is also easy to implement. However, with development of communication technologies, a mobile communications system not only supports conventional communication, but also supports, for example, device-to-device (Device to Device, D2D) communication, machine-to-machine (Machine to Machine, M2M) communication, machine type communication (Machine Type Communication, MTC), vehicle-to-vehicle (Vehicle to Vehicle, V2V) communication, sidelink (sidelink, SL) communication, or vehicle-to-everything (Vehicle to everything, V2X) communication. Embodiments of this application may also be applied to these communications systems.

In some embodiments, a communications system in embodiments of this application may be applied to a carrier aggregation (Carrier Aggregation, CA) scenario, a dual connectivity (Dual Connectivity, DC) scenario, a standalone (Standalone, SA) networking scenario, or a non-standalone (Non-Standalone, NSA) networking scenario.

In some embodiments, a communications system in embodiments of this application may be applied to an unlicensed spectrum, and the unlicensed spectrum may also be considered as a shared spectrum. Alternatively, a communications system in embodiments of this application may be applied to a licensed spectrum, and the licensed spectrum may also be considered as a non-shared spectrum.

In some embodiments, a communications system in embodiments of this application may be applied to an FR1 frequency band (corresponding to a frequency band range of 410 MHz to 7.125 GHz), or may be applied to an FR2 frequency band (corresponding to a frequency band range of 24.25 GHz to 52.6 GHz), or may be applied to a new frequency band, for example, corresponding to a frequency band range of 52.6 GHz to 71 GHz, or a high frequency band corresponding to a frequency band range of 71 GHz to 114.25 GHz.

Embodiments of this application are described with reference to a network device and a terminal device. The terminal device may also be referred to as user equipment (User Equipment, UE), an access terminal, a user unit, a user station, a mobile site, a mobile station, a remote station, a remote terminal, a mobile device, a user terminal, a terminal, a wireless communications device, a user agent, a user apparatus, or the like.

The terminal device may be a station (STATION, ST) in a WLAN, may be a cellular phone, a cordless phone, a session initiation system (Session Initiation Protocol, SIP) phone, a wireless local loop (Wireless Local Loop, WLL) station, a personal digital assistant (Personal Digital Assistant, PDA) device, a handheld device with a wireless communication function, a computing device or another processing device connected to a wireless modem, a vehicle-mounted device, a wearable device, a terminal device in a next-generation communications system such as an NR network, or a terminal device in a future evolved public land mobile network (Public Land Mobile Network, PLMN), or the like.

In embodiments of this application, the terminal device may be deployed on land, including being indoors or outdoors, handheld, wearable, or vehicle-mounted. The terminal device may also be deployed on water (for example, on a ship), or may be deployed in the air (for example, on an airplane, an air balloon, or a satellite).

In embodiments of this application, the terminal device may be a mobile phone (Mobile Phone), a tablet computer (Pad), a computer with a wireless transceiver function, a virtual reality (Virtual Reality, VR) terminal device, an augmented reality (Augmented Reality, AR) terminal device, a wireless terminal device in industrial control (industrial control), a wireless terminal device in self-driving (self-driving), a wireless terminal device in remote medical (remote medical), a wireless terminal device in smart grid (smart grid), a wireless terminal device in transportation safety (transportation safety), a wireless terminal device in smart city (smart city), or a wireless terminal device in smart home (smart home), a vehicle-mounted communications device, a wireless communications chip/application specific integrated circuit (application specific integrated circuit, ASIC)/system on chip (System on Chip, SoC), or the like.

By way of example rather than limitation, in embodiments of this application, the terminal device may alternatively be a wearable device. The wearable device may also be referred to as a smart wearable device, and is a general term for wearable devices, such as glasses, gloves, watches, clothes, and shoes, that are intelligently designed and developed based on daily wearing by using a wearable technology. The wearable device is a portable device that can be directly worn or integrated into clothes or accessories of a user. In addition to being a hardware device, the wearable device can also realize various functions through software support, data interaction, and cloud interaction. In a broad sense, the wearable smart device includes a full-featured and large-sized device that can implement some or all of functions without relying on a smartphone, for example, a smart watch or smart glasses, and a device that only focuses on a specific type of application function and needs to cooperate with another device such as a smartphone, for example, various smart bracelets and smart jewelries for physical sign monitoring.

In embodiments of this application, the network device may be a device configured to communicate with a mobile device. The network device may be an access point (Access Point, AP) in a WLAN, may be a base transceiver station (Base Transceiver Station, BTS) in GSM or CDMA, may be a NodeB (NodeB, NB) in WCDMA, or may be an evolutional Node B (Evolutional Node B, eNB or eNodeB) in LTE, or a relay station or an access point, or a vehicle-mounted device, a wearable device, a network device or a gNB (gNB) or a transmission reception point (Transmission Reception Point, TRP) in an NR network, or a network device in a future evolved PLMN, or a network device in an NTN, or the like.

By way of example rather than limitation, in embodiments of this application, the network device may have a mobility characteristic. For example, the network device may be a mobile device. In some embodiments, the network device may be a satellite or a balloon station. For example, the satellite may be a low earth orbit (low earth orbit, LEO) satellite, a medium earth orbit (medium earth orbit, MEO) satellite, a geostationary earth orbit (geostationary earth orbit, GEO) satellite, a high elliptical orbit (High Elliptical Orbit, HEO) satellite, or the like. In some embodiments, the network device may alternatively be a base station disposed in a location such as land or water.

In embodiments of this application, the network device may provide a service for a cell. The terminal device communicates with the network device by using a transmission resource (for example, a frequency domain resource or a spectrum resource) used by the cell. The cell may be a cell corresponding to the network device (for example, a base station). The cell may belong to a macro station or may belong to a base station corresponding to a small cell (Small cell). The small cell herein may include a metro cell (Metro cell), a micro cell (Micro cell), a pico cell (Pico cell), a femto cell (Femto cell), or the like. These small cells have a characteristic of a small coverage range and low transmit power, and are applicable to providing a high-rate data transmission service.

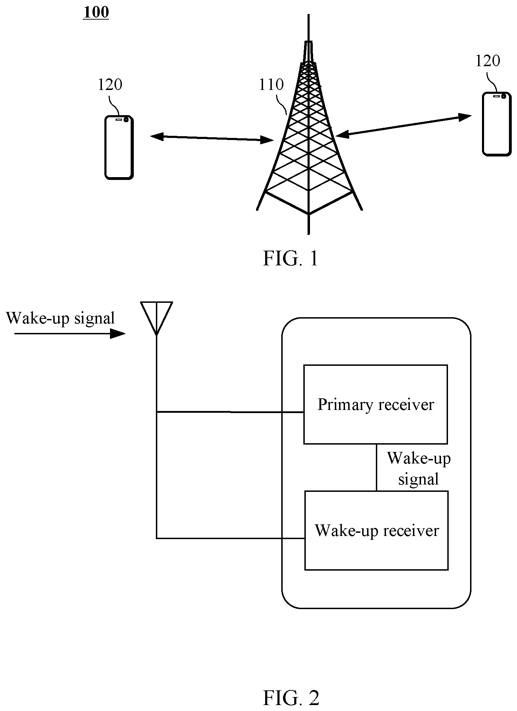

For example, a communications system 100 to which an embodiment of this application is applied is shown in FIG. 1. The communications system 100 may include a network device 110, and the network device 110 may be a device that communicates with a terminal device 120 (or referred to as a communications terminal or a terminal). The network device 110 may provide communication coverage for a specific geographical region, and may communicate with a terminal device within the coverage region.

FIG. 1 exemplarily shows one network device and two terminal devices. In some embodiments, the communications system 100 may include a plurality of network devices, and another quantity of terminal devices may be included in a coverage of each network device, which is not limited in embodiments of this application.

In some embodiments, the communications system 100 may further include another network entity such as a network controller or a mobility management entity, which is not limited in embodiments of this application.

It should be understood that in embodiments of this application, a device having a communication function in a network/system may be referred to as a communications device. The communications system 100 shown in FIG. 1 is used as an example. A communications device may include a network device 110 and a terminal device 120 having a communication function, and the network device 110 and the terminal device 120 may be specific devices described above. Details are not described herein again. The communications device may further include other devices in the communications system 100, such as a network controller, a mobility management entity, and other network entities. This is not limited in embodiments of this application.

It should be understood that the terms "system" and "network" in this specification may often be used interchangeably in this specification. In this specification, the term "and/or" is merely an association that describes associated objects, and indicates that three relationships may exist. For example, A and/or B may represent three cases: only A exists, both A and B exist, and only B exists. In addition, the character "/" herein generally indicates an "or" relationship between the associated objects.

It should be understood that this specification relates to a first communications device and a second communications device. The first communications device may be a terminal device, for example, a mobile phone, a machine facility, customer premise equipment (Customer Premise Equipment, CPE), an industrial device, or a vehicle, and the second communications device may be a peer communications device of the first communications device, for example, a network device, a mobile phone, an industrial device, or a vehicle. In embodiments of this application, the first communications device may be a terminal device, and the second communications device may be a network device (that is, uplink communication or downlink communication); or the first communications device may be a first terminal, and the second communications device may be a second terminal (that is, sidelink communication).

The terms used in implementations of this application are only used to illustrate specific embodiments of this application, but are not intended to limit this application. The terms "first", "second", "third", "fourth", and the like in the specification, claims, and drawings of this application are used to distinguish between different objects, rather than to describe a specific order. In addition, the terms "include" and "have" and any variations thereof are intended to cover a non-exclusive inclusion.

It should be understood that, the "indication" mentioned in embodiments of this application may be a direct indication or an indirect indication, or indicate an association. For example, "A indicates B" may mean that A indicates B directly, where for example, B may be obtained by using A; may mean that A indicates B indirectly, where for example, A indicates C, and B may be obtained by using C; or may mean that there is an association between A and B.

In the description of embodiments of this application, the term "corresponding" may mean that there is a direct or indirect correspondence between two elements, or that there is an association between two elements, or that there is a relationship of "indicating" and "being indicated", "configuring" and "being configured", or the like.

In embodiments of this application, "pre-definition" or "pre-configuration" can be implemented by prestoring corresponding code or a corresponding table in a device (for example, including a terminal device and a network device) or in other manners that can be used for indicating related information. A specific implementation thereof is not limited in this application. For example, predefined may refer to being defined in a protocol.

In embodiments of this application, the "protocol" may refer to a standard protocol in the communications field, and may be, for example, evolution of an existing LTE protocol, an NR protocol, a Wi-Fi protocol, or a protocol related to another related communications system. A type of the protocol is not limited in this application.

To facilitate understanding of the technical solutions in embodiments of this application, the following describes the technical solutions in this application in detail by using specific embodiments. The following related technologies, as optional solutions, may be randomly combined with the technical solutions of the embodiments of this application, all of which fall within the protection scope of the embodiments of this application. The embodiments of this application include at least part of the following content.

To better understand embodiments of this application, terminal energy saving based on a wake-up receiver in this application is described.

To further save power of a UE, a wake-up receiver (Wake up receiver) is introduced to receive a wake-up signal. The wake-up receiver features ultra-low cost, ultra-low complexity, and ultra-low power consumption, and the wake-up receiver mainly receives a wake-up signal (Wake up signal, WUS) based on envelope detection. Therefore, the wake-up signal (Wake up signal, WUS) received by the wake-up receiver is different from a signal carried by a physical downlink control channel (Physical Downlink Control Channel, PDCCH) in terms of a modulation scheme and a waveform. The wake-up signal mainly includes an envelope signal obtained by performing amplitude shift keying (Amplitude Shift Keying, ASK) modulation on a carrier signal. Demodulation of the envelope signal is mainly accomplished by driving a low-power circuit by using energy provided by a wireless radio frequency signal. Therefore, the wake-up receiver may be passive. The wake-up receiver may alternatively be powered by a terminal. Regardless of the power supplying mode, the wake-up receiver greatly reduces power consumption compared with a conventional receiver of the UE. The wake-up receiver may be integrated with the UE as an additional module of a receiver of the UE, or may be used alone as a wake-up function module of the UE.

A block diagram of a system of a receiver based on zero-power wake-up may be shown in FIG. 2. The wake-up receiver receives a wake-up signal. If it needs to turn on the receiver on the UE, the UE may be instructed to turn on a primary receiver. Otherwise, the primary receiver of the UE may be in an off state.

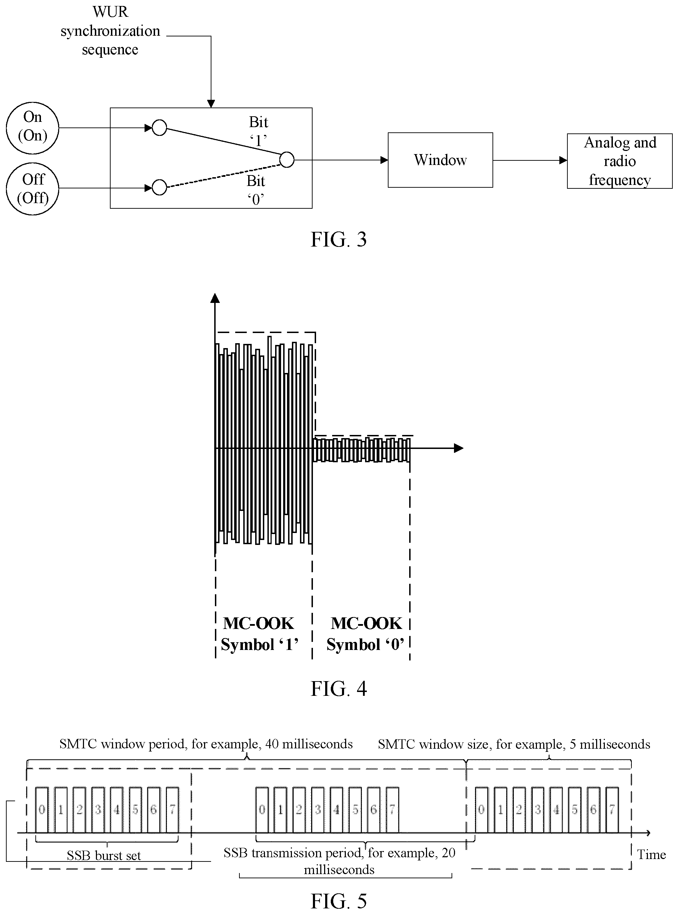

A signal received by the wake-up receiver may be referred to as a wake-up radio (wake-up radio, WUR) signal. A relatively simple modulation scheme is used for the signal, to meet reception requirements of the wake-up receiver with ultra-low power consumption and ultra-low complexity. The wake-up signal (WUS) is one type of WUR signal. In a method for generating a WUR signal, for example, a wake-up signal in the 802.11 technology, on-off keying (On-Off Keying, OOK) modulation is used. A principle of the OOK modulation is to modulate amplitude of a carrier signal to a non-zero value and a zero value, which respectively correspond to on (On) and off (Off), to represent information bits. OOK is also referred to as binary amplitude shift keying (2ASK), as shown in FIG. 3, with the WUR-Sync part carrying a synchronization sequence that is repeated twice. In this sequence, bit 1 is modulated to On, and bit 0 is modulated to Off.

The OOK signal is generated by using multi-carrier (Multi-carrier, MC), and is therefore referred to as an MC-OOK signal. The OOK signal may be generated through existing multi-carrier modulation such as orthogonal frequency-division multiplexing (Orthogonal frequency-division multiplexing, OFDM) modulation, which may maintain good compatibility with an OFDM system, thereby reducing complexity of a transmitter introduced for implementing the WUR signal. FIG. 4 is a schematic diagram of an MC-OOK signal generated through multi-carrier. Corresponding amplitude values are mapped onto a plurality of subcarriers in frequency domain, and a waveform of a time-domain signal obtained by performing inverse discrete Fourier transform (Inverse Discrete Fourier Transform, IDFT) resembles that formed through ASK modulation, where bit 1 is represented by a high level of the signal, and bit 0 is represented by a low level of the signal.

To better understand embodiments of this application, RRM measurement related to this application is described.

For a wireless mobile communications system, accurate measurement of cell quality and beam quality is a basis for effectively performing radio resource management and mobility management. For 5G NR, currently, two types of reference signals are mainly considered as measurement reference signals, which are a synchronization signal block (Synchronization Signal Block, SSB) and a channel state information reference signal (Channel State Information Reference Signal, CSI-RS).

An SSB measurement timing configuration (SSB Measurement Timing Configuration, SMTC) is time domain resource configuration information for SSB measurement, and is also an important concept newly introduced in 5G NR measurement configuration. The SMTC is mainly used to configure a set of measurement time windows based on the SSB measurement, and parameters such as a size, a location, and a period of the windows may be adjusted by configuring the parameters. An example is shown in FIG. 5.

It should be specifically noted that the SMTC is configured for each frequency. During measurement, the UE has a set of SMTC configuration on each measurement frequency to indicate information about available measurement windows on the frequency. However, this restriction was gradually relaxed in protocol discussions. In Release 15 (release15, R15) phase, to match different synchronization signal block periods of different cells, two sets of SMTC parameters are allowed to be configured for connected-state intra-frequency measurement of a given cell. For example, in addition to a basic SMTC configuration, a set of relatively intensive measurement windows may be configured for a serving cell and a cell indicated in a specific cell list for use. In the subsequent Release 16 (release16, R16) phase, a maximum quantity of SMTC configurations on each frequency has also been increased to two for measurement of an idle state, further increasing flexibility of network operation.

In addition, higher layer signalling may indicate specific configuration information of a specific measurement reference signal through a reference signal configuration (Reference Signal Config) parameter. For SSB-based measurement, ssb-ToMeasure (ssb-ToMeasure) indicates, through a bitmap, location information of an SSB actually transmitted in an SSB burst set. The UE may learn, through ssb-ToMeasure, SSB candidate locations where SSBs have actually been transmitted, and SSB candidate locations where no SSB has been transmitted. The UE does not need to perform measurement at a location where no SSB has been transmitted, thereby saving energy of the UE.

A base station may configure, by using higher layer signalling, one or more CSI-RS resources for the UE to perform CSI-RS-based measurement. First, on a cell basis, higher layer signalling may provide CSI-RS configuration parameters at a cell level, for example, information such as a cell identity (Identity, ID), a measured bandwidth of a cell, and a resource density. Moreover, since a plurality of CSI-RS resources may be configured for each cell, further, configuration information of the various CSI-RS resource levels such as a specific CSI-RS index, information about time domain and frequency domain locations occupied by the CSI-RS resources, and a sequence generation manner may be provided in the parameter configuration.

Mobility management of a UE in an NR system mainly includes a cell selection process and a cell reselection process of the UE in a radio resource control (Radio Resource Control, RRC) idle (RRC_IDLE) state or RRC inactive (RRC_INACTIVE) state and a handover process of the UE in a connected state.

### 1. Mobility management in the RRC_IDLE state or RRC_INACTIVE state

For the UE in the RRC_IDLE state or RRC_INACTIVE state, a prerequisite for the UE to camp on a cell is that signal quality (including measurement results of reference signal received power (Reference Signal Received Power, RSRP) and reference signal received quality (Reference Signal Received Quality, RSRQ)) of the cell meets the cell selection S criterion. After selecting a suitable cell, the UE continuously evaluates cell reselection. Measurement to be performed for evaluating the cell reselection is categorized and performed based on reselection priorities of various frequencies. Specifically:

For frequencies with a higher priority, measurement of neighboring cells is always performed.

For intra-frequency, when both an RSRP value and an RSRQ value of a serving cell are higher than an intra-frequency measurement threshold configured by a network, the UE may stop measurement of intra-frequency neighboring cells. Otherwise, the measurement needs to be performed.

For equal-priority frequencies and lower-priority frequencies, when both an RSRP value and an RSRQ value of the serving cell are higher than an inter-frequency measurement threshold configured by the network, the UE may stop measurement of neighboring cells on equal-priority frequencies and lower-priority frequencies. Otherwise, the measurement is to be performed.

After a plurality of candidate cells are obtained through measurement, a process of determining a target cell for the cell reselection is basically the same as that in an LTE system, following the principle of prioritizing reselection of a cell on a higher-priority frequency. Specifically:

For reselection of cells on higher-priority frequencies, signal quality of the cell is required to be higher than a specific threshold and be maintained for a specified duration, with the UE camping on a source cell for no less than one second.

For reselection of intra-frequency cells and cells on equal-priority frequencies, the R criterion needs to be met (ranked by RSRP), signal quality of a new cell needs to be better than that of a current cell and be maintained for a specified duration, with the UE camping on the source cell for no less than one second.

For reselection of cells on lower-priority frequencies, it is required that no cell on higher-priority frequencies and equal-priority frequencies meets the requirement, signal quality of the source cell is lower than a specific threshold, and signal quality of cells on lower-priority frequencies is higher than a specific threshold and maintained for a specified duration, with the UE camping on the source cell for no less than one second.

In a reselection process of intra-frequency cells and cells on equal-priority frequencies, when there are a plurality of candidate cells meeting the requirement, the LTE system selects an optimal cell as the target cell for the reselection by using an RSRP ranking method. Since the UE in the NR system accesses a cell by using a beam, both cell signal quality and a quantity of good beams need to be considered when determining the target cell, to increase a probability that the UE successfully accesses the cell by using a good beam. To achieve this objective, the NR system selects the best several cells with similar signal quality before selecting the target cell, and then selects a cell with a maximum quantity of good beams among the several cells as the target cell.

### 2. Mobility management in a connected state

Mobility management of the UE in the connected state is mainly implemented through a handover process controlled by a network. The NR system inherits a handover procedure of the LTE system, and mainly includes three phases: handover preparation, handover execution, and handover completion.

In the handover preparation phase, after receiving a measurement report transmitted by the UE, a source base station makes a handover decision and initiates a handover request to a target base station. If the target cell accepts the request, the target base station transmits a handover response message to the source base station by using an inter-base station interface. The message includes configuration information of the target cell, that is, a handover command.

In the handover execution phase, the source base station transmits the handover command to the UE. After receiving the handover command, the UE disconnects a connection to the source cell, starts to establish downlink synchronization with the target cell, initiates a random access procedure to the target cell by using a random access resource configured in the handover command, and reports a handover complete message when the random access is completed. In a process in which the UE accesses the target cell, the source base station forwards, to the target base station, a data packet transmitted by a user plane function (User Plane Function, UPF) entity, and transmits, to the target base station, status information of uplink and downlink transmission of data packets in the source cell before the forwarding.

In the handover completion phase, the target base station transmits a path switching request to an access and mobility management function (Access and Mobility Management Function, AMF) entity, requesting the AMF entity to switch, to the target base station, a data packet transmission path from the UPF entity to an access network. Once the AMF entity responds to the request, it indicates that the path switching succeeds, and the target base station may instruct the source base station to release context information of the UE. In this case, the connection of the UE is handed over to the target cell.

To better understand embodiments of this application, an RRM measurement relaxation mechanism related to this application is described.

A terminal not in a connected state needs to perform RRM measurement of the serving cell and other neighboring cells based on network configurations, to support mobility operations, such as cell reselection. In NR standard evolution, for the sake of power saving of a terminal, when channel quality of the terminal in the serving cell is good, the terminal may not perform RRM measurement for intra-frequency nor equal-priority or lower-priority inter-frequency/inter-technology frequencies, and may increase a measurement interval for RRM measurement for higher-priority inter-frequency/inter-technology frequencies.

Specifically:
When an RSRP of the terminal in the serving cell is higher than configured SIntraSearchP and an RSRQ of the terminal in the serving cell is higher than SIntraSearchQ, the terminal may not perform RRM measurement of intra-frequency neighboring cells. SIntraSearchP and SIntraSearchQ are both threshold parameters configured by a higher layer.

When an RSRP of the terminal in the serving cell is higher than SnonIntraSearchP and an RSRQ of the terminal in the serving cell is higher than SnonIntraSearchQ, the terminal may not perform RRM measurement of inter-frequency neighboring cells and neighboring cells on intersystem lower-priority and equal-priority frequencies. In addition, for inter-frequency and intersystem higher-priority frequencies, the terminal may start relaxed RRM measurement.

For a terminal that needs to perform RRM measurement of neighboring cells, it is necessary to introduce an RRM measurement relaxation mechanism for neighboring cells, so as to further meet a power saving requirement of the terminal.

In NR standard evolution, two measurement relaxation criteria are introduced for RRM measurement for non-connected terminals: "not-at-cell-edge" and "low mobility". Both criteria are based on "cell-level" measurement results of the terminal in the serving cell. The two criteria are separately described below.

### 1. "Not-at-cell-edge" criterion

For this criterion, the network configures an RSRP threshold. In addition, the network may configure an RSRQ threshold. When an RSRP of the terminal in the serving cell is greater than the RSRP threshold, and an RSRQ of the terminal in the serving cell is greater than the RSRQ threshold in a case in which the RSRQ threshold is configured by the network, it is considered that the terminal meets the "not-at-cell-edge" criterion.

The RSRP threshold configured by the network for the "not-at-cell-edge" criterion needs to be less than SIntraSearchP and SnonIntraSearchP. If the network configures the RSRQ threshold for the "not-at-cell-edge" criterion, the RSRQ threshold for the "not-at-cell-edge" criterion needs to be less than SIntraSearchQ and SnonIntraSearchQ.

### 2. "Low mobility" criterion

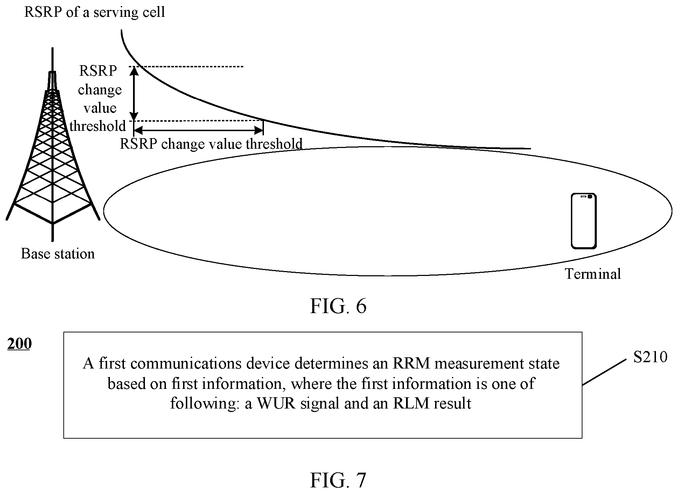

For this criterion, the network configures a duration (TSearchDeltaP) for which an RSRP variation is evaluated and a threshold (SSearchDeltaP) for an RSRP variation value. When an RSRP variation value of the terminal in the serving cell within TSearchDeltaP is less than SSearchDeltaP, it is considered that the terminal meets the "low mobility" criterion, as shown in FIG. 6.

It should be noted that the "low mobility" criterion is enhanced in later NR standard evolution, and a main change is that a second threshold SSearchDeltaP and a second TSearchDelta are introduced, so as to support further relaxation (represented by a larger scaling factor) of measurement in a low mobility scenario (such as a stationary terminal or a quasi-stationary terminal).

After completing cell selection/reselection, the terminal needs to perform normal RRM measurement within at least a period of time TSearchDeltaP.

For RRM measurement for equal-priority or lower-priority frequencies, an RRM measurement relaxation method is defined for each of different RRM measurement relaxation criteria.

Details are as follows.
When the terminal meets the "low mobility" criterion, the terminal uses a longer measurement interval when performing RRM measurement of neighboring cells. A fixed scaling factor is used to increase the measurement interval.

When the terminal meets the "not-at-cell-edge" criterion, the terminal uses a longer measurement interval when performing RRM measurement of neighboring cells. A fixed scaling factor is used to increase the measurement interval.

When the terminal meets both the "low mobility" criterion and the "not-at-cell-edge" criterion, a measurement interval of the terminal for each of intra-frequency, inter-frequency, and inter-technology frequencies is increased to one hour.

To better understand embodiments of this application, the problems solved in this application are described.

In NR standard evolution, the energy saving signal is introduced to mainly reduce power consumption of physical downlink control channel (Physical Downlink Control Channel, PDCCH) detection, and power consumption of RRM measurement is reduced by using the RRM measurement relaxation mechanism. In NR standard evolution, the wake-up radio (WUR) signal is introduced to further reduce power consumption caused by turning on the primary receiver of the UE for PDCCH detection. In addition to detecting a PDCCH, the primary receiver of the UE needs to be periodically turned on for RRM measurement. A time interval for performing RRM measurement of neighboring cells may be increased by using the RRM measurement relaxation mechanism. However, a determination condition for performing RRM measurement is based on an RRM measurement result of the serving cell. However, the RRM measurement of the serving cell is not relaxed. For the introduction of a WUR signal in NR standard evolution, a wake-up signal (a WUR signal) is received by turning on the wake-up receiver, which then triggers the primary receiver to be turned on. If the primary receiver is to be periodically turned on for RRM measurement, a power saving effect generated by the introduction of the WUS signal is greatly weakened, and a power saving gain cannot be reflected. Even if RRM measurement is performed by using the WUR receiver instead of the primary receiver, due to ultra-low complexity of the WUR receiver and limitations of supported signal waveforms, the WUR receiver cannot accurately measure a reference signal, including whether to perform RSRP measurement. Therefore, measurement accuracy is doubtful, which affects the mobility management based on the RRM measurement.

In view of the foregoing problems, this application provides a solution for determining an RRM measurement state. A first communications device may determine an RRM measurement state based on a WUR signal or an RLM result, so as to reduce RRM measurement performed by a primary receiver of the first communications device on a serving cell, thereby reducing energy consumption of the RRM measurement.

The following describes the technical solutions in this application in detail by using specific embodiments.

FIG. 7 is a schematic flowchart of a wireless communication method 200 according to an embodiment of this application. As shown in FIG. 7, the wireless communication method 200 may include at least step S210.

In step S210, the first communications device determines an RRM measurement state based on first information, where the first information is one of following: a WUR signal and an RLM result.

In some embodiments, the first communications device may be a terminal device, for example, the terminal device 120 in FIG. 1.

In the prior art, a primary receiver of a terminal device needs to be periodically turned on to perform RRM measurement, and determine, based on an RRM measurement result, whether to increase a time interval for performing RRM measurement of neighboring cells, that is, determine, based on the RRM measurement result, whether to perform relaxed RRM measurement of neighboring cells.

It should be noted that, to reduce power consumption of RRM measurement of a serving cell or a neighboring cell, such that power of the terminal device can be further saved by using the introduced WUS signal, the primary receiver of the terminal device needs to be turned on less frequently for performing RRM measurement. In the prior art, the terminal device needs to determine, based on an RRM measurement result of the serving cell, whether the terminal device meets the "low mobility" criterion and/or the "not-at-cell-edge" criterion. When the terminal device meets the "low mobility" criterion and/or the "not-at-cell-edge" criterion, RRM measurement of neighboring cells is relaxed. For a terminal with a relatively fixed position, such as a sensor, a fixed access terminal, or a common terminal that does not move for a long time or moves within only a limited range, a requirement for performing RRM measurement by the terminal is relatively low, and RRM measurement may be suspended for a long time, including RRM measurement of a serving cell. In addition, power is saved by introducing the WUS signal, since a wake-up signal (a WUS signal) is received by a wake-up receiver to trigger the primary receiver of the terminal device to be turned on. The primary receiver of the terminal device does not need to be periodically turned on to receive the PDCCH. Due to ultra-low power consumption of the wake-up receiver, the wake-up receiver may remain a turned-on state to receive WUR signals.

In view of problems in the prior art, in embodiments of this application, the first communications device may determine the RRM measurement state based on a WUR signal or a radio link monitoring (radio link monitoring, RLM) result. Optionally, the first communications device may determine, based on the WUR signal or the RLM result, whether to perform relaxed RRM measurement, or the first communications device may determine, based on the WUR signal or the RLM result, whether to perform RRM measurement. The RRM measurement may be RRM measurement for a serving cell, or may be RRM measurement for a neighboring cell.

In other words, in embodiments of this application, the primary receiver of the first communications device does not need to be periodically turned on to perform RRM measurement, so that energy consumption of the RRM measurement can be reduced. In other words, turning on the primary receiver of the first communications device to perform RRM measurement of the serving cell is triggered based on the WUR signal or the RLM result, rather than being not triggered periodically.

In embodiments of this application, relaxed RRM measurement may refer to increasing a measurement interval of RRM measurement, reducing a measurement frequency of RRM measurement, or similar operations, which is not limited in this application.

In some embodiments, the RRM measurement state includes a first RRM measurement state and a second RRM measurement state.

In some embodiments, in the first RRM measurement state, the first communications device stops performing RRM measurement, or the first communications device performs relaxed RRM measurement; and/or in the second RRM measurement state, the first communications device performs RRM measurement, and the RRM measurement performed by the first communications device is not relaxed. In other words, in the second RRM measurement state, the first communications device performs normal RRM measurement, or the first communications device performs routine RRM measurement. Optionally, the RRM measurement is RRM measurement for a serving cell, or the RRM measurement is RRM measurement for a neighboring cell. Optionally, the RRM measurement is performed by the primary receiver of the first communications device, or the RRM measurement is performed by a wake-up receiver of the first communications device.

In some embodiments, in the first RRM measurement state, the first communications device determines a mobility state of the first communications device by using the WUR signal. In other words, in the first RRM measurement state, the first communications device may determine the mobility state of the first communications device by using the WUR signal without performing RRM measurement. Optionally, after the mobility state of the first communications device is determined, the wake-up receiver of the first communications device may report the mobility state of the first communications device to the primary receiver of the first communications device, so that the primary receiver of the first communications device can determine that RRM measurement is unnecessary to be performed.

In some embodiments, in the second RRM measurement state, the first communications device determines a mobility state of the first communications device by using a measurement reference signal. In other words, in the second RRM measurement state, the first communications device may determine the mobility state of the first communications device by performing routine RRM measurement.

In some embodiments, in the second RRM measurement state, the first communications device determines a mobility state of the first communications device by using the WUR signal. In other words, in the second RRM measurement state, the first communications device may determine the mobility state of the first communications device by using the WUR signal without performing RRM measurement. Optionally, after the mobility state of the first communications device is determined, the wake-up receiver of the first communications device may report the mobility state of the first communications device to the primary receiver of the first communications device, so that the primary receiver of the first communications device can determine that RRM measurement is unnecessary to be performed.

In some embodiments, in the first RRM measurement state, when it is determined that the first communications device is not in a first mobility state, the first communications device adjusts the RRM measurement state to a second RRM measurement state. In other words, when the first communications device is not in the first mobility state, the RRM measurement state of the first communications device may be rolled back from the first RRM measurement state (for example, a state of stopping performing RRM measurement or a state of performing relaxed RRM measurement) to the second RRM measurement state (for example, a state of performing routine RRM measurement). Therefore, when the mobility state of the first communications device changes, the first communications device may roll back to a normal RRM measurement process in a timely manner, so as to ensure mobility performance of the first communications device. Optionally, after it is determined that the first communications device is not in the first mobility state, the wake-up receiver of the first communications device may report the mobility state of the first communications device to the primary receiver of the first communications device, so that the primary receiver of the first communications device may determine to roll back to a state of performing routine RRM measurement.

In some embodiments, in the first RRM measurement state, when it is determined that the first communications device is in the first mobility state, the first communications device maintains the RRM measurement state unchanged. In other words, when the first communications device is in the first mobility state, the first communications device maintains the first RRM measurement state (for example, a state of stopping performing RRM measurement or a state of performing relaxed RRM measurement), thereby reducing energy consumption of RRM measurement.

In some embodiments, in the second RRM measurement state, when it is determined that the first communications device is in a first mobility state, the first communications device adjusts the RRM measurement state to the first RRM measurement state. In other words, when the first communications device is in the first mobility state, the RRM measurement state of the first communications device may be adjusted from the second RRM measurement state (for example, a state of performing routine RRM measurement) to the first RRM measurement state (for example, a state of stopping performing RRM measurement or a state of performing relaxed RRM measurement), thereby reducing energy consumption of RRM measurement. Optionally, after it is determined that the first communications device is in the first mobility state, the wake-up receiver of the first communications device may report the mobility state of the first communications device to the primary receiver of the first communications device, so that the primary receiver of the first communications device may determine a state of stopping performing routine RRM measurement.

In some embodiments, in the second RRM measurement state, when it is determined that the first communications device is not in the first mobility state, the first communications device maintains the RRM measurement state unchanged. In other words, when the first communications device is not in the first mobility state, the first communications device maintains the second RRM measurement state (for example, a state of performing routine RRM measurement), thereby ensuring mobility performance of the first communications device. Optionally, after it is determined that the first communications device is not in the first mobility state, the wake-up receiver of the first communications device may report the mobility state of the first communications device to the primary receiver of the first communications device, so that the primary receiver of the first communications device may determine to maintain a state of performing routine RRM measurement.

In some embodiments, the first mobility state is a low-mobility state. In other words, when the first communications device is in the first mobility state, it may be considered that the first communications device meets the "low mobility" criterion. For description of the "low mobility" criterion, reference may be made to the foregoing related description, and details are not described herein again.

In some embodiments, the first mobility state is a state in which the first communications device is not located at a cell edge. In other words, when the first communications device is in the first mobility state, it may be considered that the first communications device meets the "not-at-cell-edge" criterion. For description of the "not-at-cell-edge" criterion, reference may be made to the foregoing related description. Details are not described herein again.

In some embodiments, in a case in which the first information is a WUR signal, S210 may specifically include:
determining, by the first communications device, the RRM measurement state based on whether target control information is detected in the WUR signal, or determining, by the first communications device, the RRM measurement state based on a measurement result for the WUR signal.

Optionally, the wake-up receiver of the first communications device may transmit second indication information to the primary receiver of the first communications device.

The second indication information may be used to indicate whether the target control information is detected in the WUR signal, or the second indication information may be used to indicate a measurement result for the WUR signal, or the second indication information may be used to indicate whether the target control information is detected in the WUR signal within a period of time, or the second indication information may be used to indicate a measurement result for the WUR signal within a period of time, or the second indication information may be used to indicate a quantity of pieces of target control information detected in the WUR signal within a period of time, or the second indication information may be used to indicate a quantity of pieces of target control information not detected in the WUR signal within a period of time, or the second indication information may be used to indicate a quantity of times of an event that a measurement result for the WUR signal is greater than or equal to a first threshold within a period of time, or the second indication information may be used to indicate a quantity of times of an event that a measurement result for the WUR signal is less than a first threshold within a period of time, or the second indication information may be used to indicate a determined RRM measurement state.

Further, the primary receiver of the first communications device may determine the RRM measurement state based on the second indication information.

In some embodiments, the second communications device may periodically transmit WUR signals. The first communications device receives a WUR signal by using the wake-up receiver; and the first communications device determines the RRM measurement state based on whether target control information is detected in the WUR signal, or the first communications device determines the RRM measurement state based on a measurement result for the WUR signal.

Specifically, the second communications device periodically transmits WUR signals. The first communications device receives the WUR signal by using the wake-up receiver, and the first communications device determines, based on information detected in the WUR signal, to relax the RRM measurement. The primary receiver of the first communications device may not perform periodic RRM measurement, especially the RRM measurement of the serving cell. A detection result of the WUR signal may reflect a mobility characteristic of the first communications device, for example, "low mobility" and "not-at-cell-edge". In other words, in embodiments of this application, RRM measurement relaxation of the serving cell or neighboring cells is determined based on the detection result of the WUR signal, instead of a result of an RRM reference signal measured by the primary receiver of the first communications device, which is equivalent to receiving the WUR signal by using the wake-up receiver, thereby implementing RRM measurement relaxation of the serving cell by the primary receiver.

In some embodiments, the second communications device may be a transmitting device of a WUR signal. For example, the second communications device is a base station, or the second communications device is a specific network node that transmits a WUR signal, or the second communications device is another terminal. For example, a UE (that is, the second communications device) in a cell that meets the "not-at-cell-edge" criterion transmits a WUR signal, and the WUR signal has a specific coverage range. When a target UE (that is, the first communications device) detects the WUR signal, and the WUR signal reflects information about a specific mobility state, the target UE (that is, the first communications device) determines that the UE transmitting the WUR signal is in a specific mobility state.

In some embodiments, the determining, by the first communications device, the RRM measurement state based on whether target control information is detected in the WUR signal includes:
in a case in which the target control information is detected in the WUR signal, determining, by the first communications device, that the RRM measurement state is a first RRM measurement state; and/or in a case in which the target control information is not detected in the WUR signal, determining, by the first communications device, that the RRM measurement state is a second RRM measurement state.

For example, when the target control information is detected in the WUR signal, the RRM measurement may be stopped, or RRM measurement relaxation may be performed; and/or, when the target control information is not detected in the WUR signal, an RRM measurement relaxation rollback may be performed, that is, routine RRM measurement may be performed.

In some embodiments, the determining, by the first communications device, the RRM measurement state based on whether target control information is detected in the WUR signal includes:
in a case in which the target control information is detected in the WUR signal, determining, by the first communications device, that the first communications device is in a first mobility state, and in a case in which the target control information is not detected in the WUR signal, determining, by the first communications device, that the first communications device is not in the first mobility state; and
in a case in which the first communications device is in the first mobility state, determining, by the first communications device, that the RRM measurement state is a first RRM measurement state; and/or in a case in which the first communications device is not in the first mobility state, determining, by the first communications device, that the RRM measurement state is a second RRM measurement state.

In other words, whether the target control information is detected in the WUR signal may be used to determine an RRM mobility state of the first communications device, for example, "low mobility" or "not-at-cell-edge".

In some embodiments, the target control information includes at least one of following: a synchronization sequence, a random access preamble, cell information, beam information, information related to mobility measurement, or information related to a mobility state.

Specifically, when the target control information is detected in the WUR signal received by the first communications device by using the wake-up receiver, it is determined that the first communications device meets a specific RRM mobility state requirement, for example, "low mobility" or "not-at-cell-edge", and the primary receiver is unnecessary to be turned on for RRM measurement, thereby implementing power saving of the first communications device. The RRM mobility state of the first communications device is determined without depending on measurement performed by the primary receiver in a turned-on state. In this case, if the first communications device is in a state of "low mobility" or "not-at-cell-edge", the RRM mobility state may be determined only by relying on the wake-up receiver, so that corresponding measurement relaxation is performed, thereby reducing power consumption caused by the RRM measurement. When the first communications device determines, based on the WUR signal, that the first communications device meets a specific mobility state requirement, the first communications device may maintain a current RRM measurement relaxation state, including monitoring the mobility state of the first communications device in the serving cell by using the wake-up receiver.

In some embodiments, the determining, by the first communications device, the RRM measurement state based on a measurement result for the WUR signal includes:
in a case in which the measurement result for the WUR signal is greater than or equal to a first threshold, determining, by the first communications device, that the RRM measurement state is a first RRM measurement state; and/or in a case in which the measurement result for the WUR signal is less than a first threshold, determining, by the first communications device, that the RRM measurement state is a second RRM measurement state.

For example, when the measurement result for the WUR signal is greater than or equal to the first threshold, the RRM measurement may be stopped, or RRM measurement relaxation may be performed; and/or when the measurement result for the WUR signal is less than the first threshold, an RRM measurement relaxation rollback may be performed, that is, routine RRM measurement may be performed.

In some embodiments, the determining, by the first communications device, the RRM measurement state based on a measurement result for the WUR signal includes:
in a case in which the measurement result for the WUR signal is greater than or equal to a first threshold, determining, by the first communications device, that the first communications device is in a first mobility state, and in a case in which the measurement result for the WUR signal is less than the first threshold, determining, by the first communications device, that the first communications device is not in the first mobility state; and
in a case in which the first communications device is in the first mobility state, determining, by the first communications device, that the RRM measurement state is a first RRM measurement state; and/or in a case in which the first communications device is not in the first mobility state, determining, by the first communications device, that the RRM measurement state is a second RRM measurement state.

In other words, the measurement result for the WUR signal may be used to determine an RRM mobility state of the first communications device, for example, "low mobility" or "not-at-cell-edge".

Specifically, for example, when the first communications device is in the first mobility state, the RRM measurement may be stopped, or RRM measurement relaxation may be performed; and/or, when the first communications device is not in the first mobility state, an RRM measurement relaxation rollback may be performed, that is, routine RRM measurement may be performed.

In some embodiments, the measurement result for the WUR signal includes but is not limited to at least one of following:
reference signal received power (Reference Signal Received Power, RSRP), reference signal received quality (Reference Signal Received Quality, RSRQ), a signal to interference plus noise ratio (Signal to Interference plus Noise Ratio, SINR), or a path loss.

In some embodiments, the measurement result for the WUR signal may be measured by the wake-up receiver.

In some embodiments, the first threshold is agreed upon by a protocol, or the first threshold is configured by a network, or the first threshold is determined by the first communications device.

In some embodiments, in a case in which the first information is an RLM result, S210 may specifically include:
determining, by the first communications device, the RRM measurement state based on whether the RLM result indicates that a radio link failure (Radio Link Failure, RLF) occurs, or determining, by the first communications device, the RRM measurement state based on a quantity of In Synchronization (In Synchronization, IS) states within a first duration associated with the RLM result, or determining, by the first communications device, the RRM measurement state based on a quantity of Out Of Synchronization (Out Of Synchronization, OOS) states within a second duration associated with the RLM result.

In some embodiments, the RLM result is obtained by the first communications device by measuring an RLM reference signal by using the primary receiver, or the RLM result is obtained by the first communications device by measuring an RLM reference signal by using the wake-up receiver.

Optionally, if the RLM result is obtained by the first communications device by measuring an RLM reference signal by using the wake-up receiver, the wake-up receiver of the first communications device may transmit the RLM result to the primary receiver of the first communications device.

It should be noted that the RRM measurement is mainly suitable for monitoring mobility of the UE, and performing cell selection in a timely manner, to prevent a radio link failure. For a terminal with a relatively fixed position, such as a sensor, a fixed access terminal, or a common terminal that does not move for a long time or moves within only a limited range, a requirement for performing RRM measurement by the terminal is relatively low, and RRM measurement may be suspended for a long time, including RRM measurement of a serving cell, or RRM measurement relaxation may be performed. Completely stopping RRM measurement is equivalent to a high degree of RRM measurement relaxation.

At present, the UE may determine, based on following information, that the UE is a stationary or low-mobility terminal:
based on the RRM measurement result, the UE meets the "low mobility" criterion or the "not-at-cell-edge" criterion;
mobility of the terminal is evaluated based on a beam change of the terminal in the serving cell; and
the terminal determines, based on registration information, whether the terminal has an attribute of being stationary.

In embodiments of this application, the first communications device may determine the RRM measurement state based on the RLM result. The first communications device needs to transmit and receive data in the serving cell. To ensure normal data transmission, the first communications device needs to perform radio link monitoring (RLM). By performing the RLM, the first communications device may determine that the first communications device is in a specific mobility state, and may determine to stop RRM measurement, perform RRM measurement relaxation, or perform an RRM measurement relaxation rollback. Specifically, for example, in an NR system, the UE in the RRC connected (RRC_CONNECTED) state monitors downlink radio link quality of the primary cell by using an RLM reference signal (RLM Reference Signal, RLM-RS). A measurement result of the RLM-RS is used to evaluate a block error rate (Block error rate, BLER) of a hypothetical PDCCH. Based on an evaluation result of the RLM-RS, a radio link failure (RLF) occurs when a specific condition is met, so that the UE triggers an RRC connection reestablishment process.

In embodiments of this application, the first communications device may also determine the RRM measurement state based on an IS/OOS state, obtained based on RLM measurement, of a radio link. Specifically, after the RLM-RS is configured, the first communications device measures the RLM-RS, compares a measurement result with an IS/OOS threshold to obtain an IS/OOS state of the radio link, and periodically reports an evaluation result of the IS/OOS state to a higher layer. If a measurement result of any one of all configured RLM-RSs is higher than the IS threshold, a physical layer reports the IS state to the higher layer. If measurement results of all configured RLM-RSs are lower than the OOS threshold, a physical layer reports the OOS state to the higher layer. The first communications device may determine the RRM measurement state based on the quantity of IS states within the first duration associated with the RLM result, or the first communications device determines the RRM measurement state based on the quantity of OOS states within the second duration associated with the RLM result.

In some embodiments, the determining, by the first communications device, the RRM measurement state based on whether the RLM result indicates that an RLF occurs includes:
in a case in which the RLM result indicates that no RLF occurs, determining, by the first communications device, that the RRM measurement state is a first RRM measurement state; and/or in a case in which the RLM result indicates that an RLF occurs, determining, by the first communications device, that the RRM measurement state is a second RRM measurement state.

For example, when the RLM result indicates that no RLF occurs, the RRM measurement may be stopped, or RRM measurement relaxation may be performed; and/or when the RLM result indicates that an RLF occurs, an RRM measurement relaxation rollback may be performed, that is, routine RRM measurement may be performed.

In some embodiments, the determining, by the first communications device, the RRM measurement state based on whether the RLM result indicates that an RLF occurs includes:
in a case in which the RLM result indicates that no RLF occurs, determining, by the first communications device, that the first communications device is in a first mobility state, and in a case in which the RLM result indicates that an RLF occurs, determining, by the first communications device, that the first communications device is not in the first mobility state; and
in a case in which the first communications device is in the first mobility state, determining, by the first communications device, that the RRM measurement state is a first RRM measurement state; and/or in a case in which the first communications device is not in the first mobility state, determining, by the first communications device, that the RRM measurement state is a second RRM measurement state.

In other words, the RLM result may be used to determine an RRM mobility state of the first communications device, for example, "low mobility" or "not-at-cell-edge".

In some embodiments, the determining, by the first communications device, the RRM measurement state based on a quantity of IS states within a first duration associated with the RLM result includes:
in a case in which the quantity of IS states within the first duration associated with the RLM result is greater than or equal to a second threshold, determining, by the first communications device, that the RRM measurement state is a first RRM measurement state; and/or in a case in which the quantity of IS states within the first duration associated with the RLM result is less than a second threshold, determining, by the first communications device, that the RRM measurement state is a second RRM measurement state.

For example, when the quantity of IS states within the first duration associated with the RLM result is greater than or equal to the second threshold, the RRM measurement may be stopped, or RRM measurement relaxation may be performed; and/or when the quantity of IS states within the first duration associated with the RLM result is less than the second threshold, an RRM measurement relaxation rollback may be performed, that is, routine RRM measurement may be performed.

In some embodiments, the determining, by the first communications device, the RRM measurement state based on a quantity of IS states within a first duration associated with the RLM result includes:
in a case in which the quantity of IS states within the first duration associated with the RLM result is greater than or equal to a second threshold, determining, by the first communications device, that the first communications device is in a first mobility state, and in a case in which the quantity of IS states within the first duration associated with the RLM result is less than the second threshold, determining, by the first communications device, that the first communications device is not in the first mobility state; and
in a case in which the first communications device is in the first mobility state, determining, by the first communications device, that the RRM measurement state is a first RRM measurement state; and/or in a case in which the first communications device is not in the first mobility state, determining, by the first communications device, that the RRM measurement state is a second RRM measurement state.

In other words, the quantity of IS states within the first duration associated with the RLM result may be used to determine an RRM mobility state of the first communications device, for example, "low mobility" or "not-at-cell-edge".

In some embodiments, the determining, by the first communications device, the RRM measurement state based on a quantity of OOS states within a second duration associated with the RLM result includes:
in a case in which the quantity of OOS states within the second duration associated with the RLM result is less than a third threshold, determining, by the first communications device, that the RRM measurement state is a first RRM measurement state; and/or in a case in which the quantity of OOS states within the second duration associated with the RLM result is greater than or equal to the third threshold, determining, by the first communications device, that the RRM measurement state is a second RRM measurement state.

For example, when the quantity of OOS states within the second duration associated with the RLM result is less than the third threshold, the RRM measurement may be stopped, or RRM measurement relaxation may be performed; and/or when the quantity of OOS states within the second duration associated with the RLM result is greater than or equal to the third threshold, an RRM measurement relaxation rollback may be performed, that is, routine RRM measurement may be performed.

In some embodiments, the determining, by the first communications device, the RRM measurement state based on a quantity of OOS states within a second duration associated with the RLM result includes:
in a case in which the quantity of OOS states within the second duration associated with the RLM result is less than a third threshold, determining, by the first communications device, that the first communications device is in a first mobility state, and in a case in which the quantity of OOS states within the second duration associated with the RLM result is greater than or equal to the third threshold, determining, by the first communications device, that the first communications device is not in the first mobility state; and
in a case in which the first communications device is in the first mobility state, determining, by the first communications device, that the RRM measurement state is a first RRM measurement state; and/or in a case in which the first communications device is not in the first mobility state, determining, by the first communications device, that the RRM measurement state is a second RRM measurement state.

In other words, the quantity of OOS states within the second duration associated with the RLM result may be used to determine an RRM mobility state of the first communications device, for example, "low mobility" or "not-at-cell-edge".

In some embodiments, at least one of the first duration and the second threshold is agreed upon by a protocol, or at least one of the first duration and the second threshold is configured by a network, or at least one of the first duration and the second threshold is determined by the first communications device.

In some embodiments, at least one of the second duration and the third threshold is agreed upon by a protocol, or at least one of the second duration and the third threshold is configured by a network, or at least one of the second duration and the third threshold is determined by the first communications device.

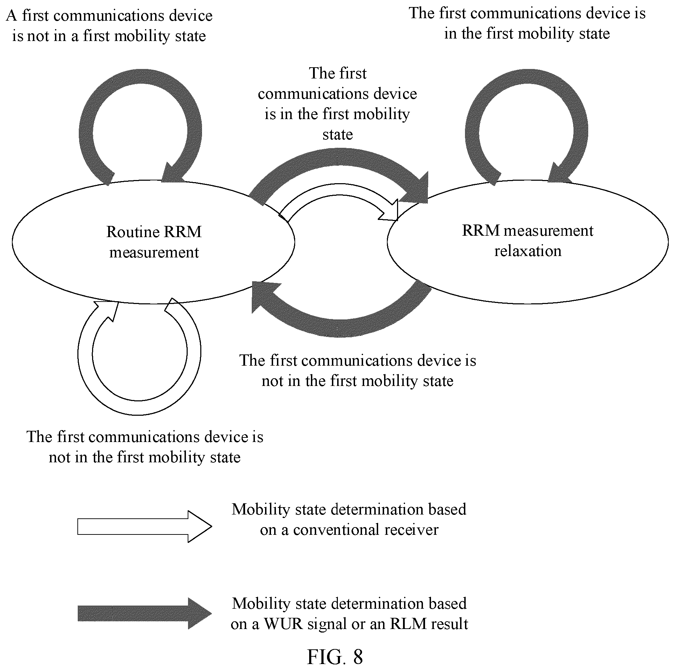

In some embodiments, as shown in FIG. 8, when the first communications device is in the first mobility state, RRM measurement relaxation is performed; and/or, when the first communications device is not in the first mobility state, an RRM measurement relaxation rollback is performed, that is, routine RRM measurement is performed.

In some embodiments, in a case in which the first communications device determines that the RRM measurement state is the first RRM measurement state, and the first communications device fails to detect the target control information within the third duration, the first communications device performs the RRM measurement. Alternatively, in a case in which a quantity of pieces of target control information detected by the first communications device within the third duration is less than a fourth threshold, the first communications device performs RRM measurement. Optionally, the performing, by the first communications device, RRM measurement includes: performing, by the first communications device, RRM measurement for a serving cell and/or a neighboring cell.

In other words, in a case in which the first communications device fails to detect the target control information within the third duration, or the quantity of pieces of target control information detected by the first communications device within the third duration is less than the fourth threshold, the RRM measurement state may be rolled back from the first RRM measurement state (for example, a state of stopping performing RRM measurement or a state of performing relaxed RRM measurement) to the second RRM measurement state (for example, a state of performing routine RRM measurement).

Specifically, an RRM measurement relaxation rollback mechanism may be triggered under a specific condition. The second communications device may periodically transmit the target control information carried by the WUR signal. If the wake-up receiver of the first communications device fails to detect the target control information within a predetermined period of time, the primary receiver may be triggered to be turned on to perform RRM measurement. A threshold of a quantity of times of an event that the first communications device fails to detect the target control information may be set. When the quantity of times of the event that the target control information is not detected reaches or exceeds the set threshold, the primary receiver is triggered to be turned on to perform RRM measurement.

In some embodiments, in a case in which the first communications device is in the first mobility state, the first communications device determines the mobility state of the first communications device by using a WUR signal. Specifically, when an RRM measurement rollback is performed, the first communications device performs RRM measurement of the serving cell and neighboring cells by using the primary receiver, where the RRM measurement of neighboring cells is not relaxed until a measurement result of the primary receiver of the first communications device for the serving cell meets the "low mobility" criterion or the "not-at-cell-edge" criterion.

In some embodiments, at least one of the third duration and the fourth threshold is agreed upon by a protocol, or at least one the third duration and the fourth threshold is configured by a network, or at least one of the third duration and the fourth threshold is determined by the first communications device.

In some embodiments, in a case in which the first communications device is in the first mobility state, the first communications device determines the RRM measurement state based on the first information. In other words, in a case in which the first communications device is in the first mobility state, the first communications device is triggered to determine the RRM measurement state based on the first information.

Specifically, the first communications device determines the RRM measurement state based on the WUR signal or the RLM result, in response to the RRM measurement result of the primary receiver for the serving cell. For example, when the measurement result of the primary receiver for the serving cell meets the "low mobility" criterion or the "not-at-cell-edge" criterion, the first communications device determines the RRM measurement state based on the WUR signal or the RLM result. In this state, the first communications device may perform relaxed RRM measurement for the neighboring cells by using the primary receiver and increase a measurement interval, or may not perform RRM measurement for the neighboring cells, depending on the mobility state of the first communications device detected only by using the wake-up receiver.

In some embodiments, the first communications device receives first indication information, where the first indication information is used to instruct the first communications device to determine the RRM measurement state based on the first information.

In some embodiments, the first indication information is carried in downlink signalling, or the first indication information is carried in sidelink signalling.

Optionally, the downlink signalling may include but is not limited to at least one of following: radio resource control (radio resource control, RRC) signalling, downlink control information (Downlink Control Information, DCI), a system message, a broadcast message, or a medium access control control element (Media Access Control Control Element, MAC CE).

Optionally, the sidelink signalling may include but is not limited to at least one of following: PC5-RRC signalling, a sidelink MAC CE, or sidelink control information (Sidelink Control Information, SCI).

Therefore, in embodiments of this application, the first communications device can determine the RRM measurement state based on the WUR signal or the RLM result, so that RRM measurement of the serving cell performed by the primary receiver of the first communications device can be reduced, thereby reducing energy consumption of the RRM measurement.

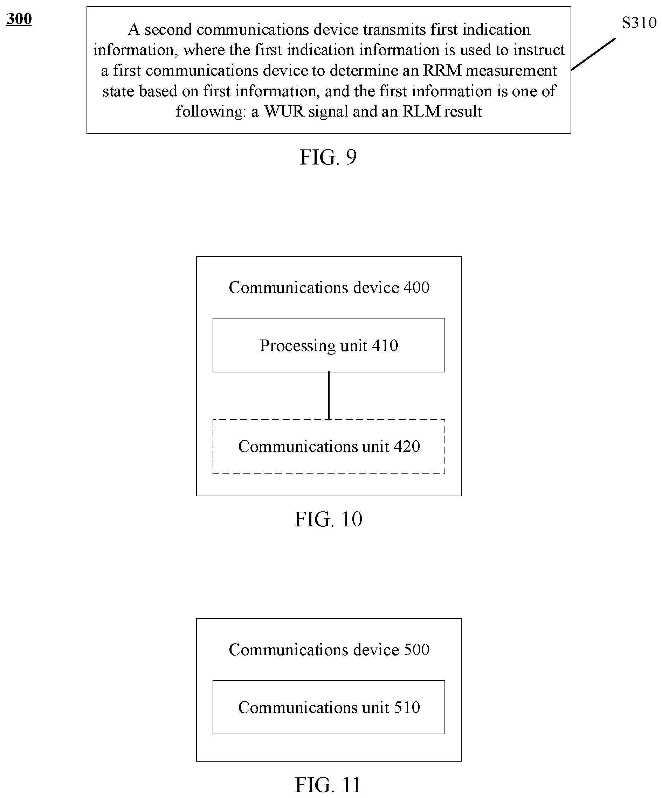

The foregoing describes in detail the embodiments of the first communications device in this application with reference to FIG. 7 and FIG. 8. With reference to FIG. 9, the following describes in detail embodiments of the second communications device in this application. It should be understood that the embodiments of the second communications device correspond to the embodiments of the first communications device. For similar descriptions, reference may be made to the embodiments of the first communications device.

FIG. 9 is a schematic flowchart of a wireless communication method 300 according to an embodiment of this application. As shown in FIG. 9, the wireless communication method 300 may include at least step S310.

In step S310, a second communications device transmits first indication information, where the first indication information is used to instruct a first communications device to determine an RRM measurement state based on first information, and the first information is one of following: a WUR signal and an RLM result.

In some embodiments, the first communications device may be a terminal device, for example, the terminal device 120 in FIG. 1.

In some embodiments, the second communications device may be a transmitting device of a WUR signal. For example, the second communications device is a base station, or the second communications device is a specific network node that transmits a WUR signal, or the second communications device is another terminal. For example, a UE (that is, the second communications device) in a cell that meets the "not-at-cell-edge" criterion transmits a WUR signal, and the WUR signal has a specific coverage. When a target UE (that is, the first communications device) detects the WUR signal, and the WUR signal reflects information about a specific mobility state, the target UE (that is, the first communications device) determines that the UE transmitting the WUR signal meets a specific mobility state requirement.

In embodiments of this application, the first communications device may determine the RRM measurement state based on the WUR signal or the RLM result. Optionally, the first communications device may determine, based on the WUR signal or the RLM result, whether to perform relaxed RRM measurement, or the first communications device may determine, based on the WUR signal or the RLM result, whether to perform RRM measurement. The RRM measurement may be RRM measurement for a serving cell, or may be RRM measurement for a neighboring cell.

In other words, in embodiments of this application, the primary receiver of the first communications device is unnecessary to be periodically turned on to perform RRM measurement, so that energy consumption of the RRM measurement can be reduced. In other words, turning on the primary receiver of the first communications device to perform RRM measurement of the serving cell is triggered based on the WUR signal or the RLM result, rather than being triggered periodically.

In embodiments of this application, relaxed RRM measurement may refer to increasing a measurement interval of RRM measurement, reducing a measurement frequency of RRM measurement, or similar operations, which is not limited in this application.

In some embodiments, the RRM measurement state includes a first RRM measurement state and a second RRM measurement state.

In some embodiments, in the first RRM measurement state, the first communications device stops performing RRM measurement, or the first communications device performs relaxed RRM measurement; and/or in the second RRM measurement state, the first communications device performs RRM measurement, and the RRM measurement performed by the first communications device is not relaxed. In other words, in the second RRM measurement state, the first communications device performs normal RRM measurement, or the first communications device performs routine RRM measurement. Optionally, the RRM measurement is RRM measurement for a serving cell, or the RRM measurement is RRM measurement for a neighboring cell. Optionally, the RRM measurement is performed by the primary receiver of the first communications device, or the RRM measurement is performed by a wake-up receiver of the first communications device.

In some embodiments, in the first RRM measurement state, the first communications device determines a mobility state of the first communications device by using the WUR signal. In other words, in the first RRM measurement state, the first communications device may determine the mobility state of the first communications device by using the WUR signal without performing RRM measurement. Optionally, after the mobility state of the first communications device is determined, the wake-up receiver of the first communications device may report the mobility state of the first communications device to the primary receiver of the first communications device, so that the primary receiver of the first communications device may determine that RRM measurement is unnecessary to be performed.

In some embodiments, in the second RRM measurement state, the first communications device determines a mobility state of the first communications device by using a measurement reference signal. In other words, in the second RRM measurement state, the first communications device may determine the mobility state of the first communications device by performing routine RRM measurement.

In some embodiments, in the second RRM measurement state, the first communications device determines a mobility state of the first communications device by using the WUR signal. In other words, in the second RRM measurement state, the first communications device may determine the mobility state of the first communications device by using the WUR signal without performing RRM measurement. Optionally, after the mobility state of the first communications device is determined, the wake-up receiver of the first communications device may report the mobility state of the first communications device to the primary receiver of the first communications device, so that the primary receiver of the first communications device may determine that RRM measurement is unnecessary to be performed.

In some embodiments, in the first RRM measurement state, when it is determined that the first communications device is not in the first mobility state, the RRM measurement state is adjusted from the first RRM measurement state to the second RRM measurement state. In other words, when the first communications device is not in the first mobility state, the RRM measurement state of the first communications device may be rolled back from the first RRM measurement state (for example, a state of stopping performing RRM measurement or a state of performing relaxed RRM measurement) to the second RRM measurement state (for example, a state of performing routine RRM measurement). Therefore, when the mobility state of the first communications device changes, the first communications device may roll back to a normal RRM measurement process in a timely manner, so as to ensure mobility performance of the first communications device. Optionally, after it is determined that the first communications device is not in the first mobility state, the wake-up receiver of the first communications device may report the mobility state of the first communications device to the primary receiver of the first communications device, so that the primary receiver of the first communications device may determine to roll back to a state of performing routine RRM measurement.

In some embodiments, in the first RRM measurement state, when it is determined that the first communications device is in the first mobility state, the RRM measurement state is maintained unchanged. In other words, when the first communications device is in the first mobility state, the first communications device maintains the first RRM measurement state (for example, a state of stopping performing RRM measurement or a state of performing relaxed RRM measurement), thereby reducing energy consumption of RRM measurement.

In some embodiments, in the second RRM measurement state, when it is determined that the first communications device is in the first mobility state, the RRM measurement state is adjusted from the second RRM measurement state to the first RRM measurement state. In other words, when the first communications device is in the first mobility state, the RRM measurement state of the first communications device may be adjusted from the second RRM measurement state (for example, a state of performing routine RRM measurement) to the first RRM measurement state (for example, a state of stopping performing RRM measurement or a state of performing relaxed RRM measurement), thereby reducing energy consumption of RRM measurement. Optionally, after it is determined that the first communications device is in the first mobility state, the wake-up receiver of the first communications device may report the mobility state of the first communications device to the primary receiver of the first communications device, so that the primary receiver of the first communications device may determine to stop performing routine RRM measurement.

In some embodiments, in the second RRM measurement state, when it is determined that the first communications device is in the first mobility state, the RRM measurement state is maintained unchanged. In other words, when the first communications device is not in the first mobility state, the first communications device maintains the second RRM measurement state (for example, a state of performing routine RRM measurement), thereby ensuring mobility performance of the first communications device. Optionally, after it is determined that the first communications device is not in the first mobility state, the wake-up receiver of the first communications device may report the mobility state of the first communications device to the primary receiver of the first communications device, so that the primary receiver of the first communications device may determine to maintain a state of performing routine RRM measurement.

In some embodiments, the first mobility state is a low-mobility state. In other words, when the first communications device is in the first mobility state, it may be determined that the first communications device meets the "low mobility" criterion. For description of the "low mobility" criterion, reference may be made to the foregoing related description, and details are not described herein again.

In some embodiments, the first mobility state is a state in which the first communications device is not located at a cell edge. In other words, when the first communications device is in the first mobility state, it may be determined that the first communications device meets the "not-at-cell-edge" criterion. For description of the "not-at-cell-edge" criterion, reference may be made to the foregoing related description. Details are not described herein again.

In some embodiments, in a case in which the first information is a WUR signal, the first communications device determines the RRM measurement state based on whether target control information is detected in the WUR signal, or the first communications device determines the RRM measurement state based on a measurement result for the WUR signal.

In some embodiments, the first communications device determining the RRM measurement state based on whether the target control information is detected in the WUR signal includes:
in a case in which the target control information is detected in the WUR signal, the RRM measurement state is determined as a first RRM measurement state; and/or in a case in which the target control information is not detected in the WUR signal, the RRM measurement state is determined as a second RRM measurement state.

In some embodiments, the first communications device determining the RRM measurement state based on whether the target control information is detected in the WUR signal:
in a case in which the target control information is detected in the WUR signal, it is determined that the first communications device is in a first mobility state, and in a case in which the target control information is not detected in the WUR signal, it is determined that the first communications device is not in the first mobility state; and
in a case in which the first communications device is in the first mobility state, the RRM measurement state is determined as a first RRM measurement state; and/or in a case in which the first communications device is not in the first mobility state, the RRM measurement state is determined as a second RRM measurement state.

In some embodiments, the first communications device determining the RRM measurement state based on the measurement result for the WUR signal includes:
in a case in which the measurement result for the WUR signal is greater than or equal to a first threshold, the RRM measurement state is determined as a first RRM measurement state; and/or in a case in which the measurement result for the WUR signal is less than a first threshold, the RRM measurement state is determined as a second RRM measurement state.

In some embodiments, the first communications device determining the RRM measurement state based on the measurement result for the WUR signal includes:
in a case in which the measurement result for the WUR signal is greater than or equal to a first threshold, it is determined that the first communications device is in a first mobility state, and in a case in which the measurement result for the WUR signal is less than the first threshold, it is determined that the first communications device is not in the first mobility state; and
in a case in which the first communications device is in the first mobility state, the RRM measurement state is determined as a first RRM measurement state; and/or in a case in which the first communications device is not in the first mobility state, the RRM measurement state is determined as a second RRM measurement state.

In some embodiments, the measurement result for the WUR signal includes at least one of following:
RSRP, RSRQ, an SINR, or a path loss.

In some embodiments, the second communications device transmits the WUR signal. Optionally, the second communications device periodically transmits the WUR signal.

In some embodiments, in a case in which the first information is the RLM result, for the first communications device determines the RRM measurement state based on whether the RLM result indicates that a radio link failure RLF occurs, or the first communications device determines the RRM measurement state based on a quantity of In Synchronization IS states within a first duration associated with the RLM result, or the first communications device determines the RRM measurement state based on a quantity of Out Of Synchronization OOS states within a second duration associated with the RLM result.

In some embodiments, the first communications device determining the RRM measurement state based on whether the RLM result indicates that an RLF occurs includes:
in a case in which the RLM result indicates that no RLF occurs, the RRM measurement state is determined as a first RRM measurement state; and/or
in a case in which the RLM result indicates that an RLF occurs, the RRM measurement state is determined as a second RRM measurement state.

In some embodiments, the first communications device determining the RRM measurement state based on whether the RLM result indicates that an RLF occurs includes:
in a case in which the RLM result indicates that no RLF occurs, it is determined that the first communications device is in a first mobility state, and in a case in which the RLM result indicates that an RLF occurs, it is determined that the first communications device is not in the first mobility state; and
in a case in which the first communications device is in the first mobility state, the RRM measurement state is determined as a first RRM measurement state; and/or in a case in which the first communications device is not in the first mobility state, the RRM measurement state is determined as a second RRM measurement state.

In some embodiments, the first communications device determining the RRM measurement state based on the quantity of IS states within the first duration associated with the RLM result includes:
in a case in which the quantity of IS states within the first duration associated with the RLM result is greater than or equal to a second threshold, the RRM measurement state is determined as a first RRM measurement state; and/or in a case in which the quantity of IS states within the first duration associated with the RLM result is less than a second threshold, the RRM measurement state is determined as a second RRM measurement state.

In some embodiments, the first communications device determining the RRM measurement state based on the quantity of IS states within the first duration associated with the RLM result includes:
in a case in which the quantity of IS states within the first duration associated with the RLM result is greater than or equal to a second threshold, it is determined that the first communications device is in a first mobility state, and in a case in which the quantity of IS states within the first duration associated with the RLM result is less than the second threshold, it is determined that the first communications device is not in the first mobility state; and
in a case in which the first communications device is in the first mobility state, the RRM measurement state is determined as a first RRM measurement state; and/or in a case in which the first communications device is not in the first mobility state, the RRM measurement state is determined as a second RRM measurement state.

In some embodiments, the first communications device determining the RRM measurement state based on the quantity of OOS states within the second duration associated with the RLM result includes:
in a case in which the quantity of OOS states within the second duration associated with the RLM result is less than a third threshold, the RRM measurement state is determined as a first RRM measurement state; and/or in a case in which the quantity of OOS states within the second duration associated with the RLM result is greater than or equal to the third threshold, the RRM measurement state is determined as a second RRM measurement state.

In some embodiments, the first communications device determining the RRM measurement state based on the quantity of OOS states within the second duration associated with the RLM result includes:
in a case in which the quantity of OOS states within the second duration associated with the RLM result is less than a third threshold, it is determined that the first communications device is in a first mobility state, and in a case in which the quantity of OOS states within the second duration associated with the RLM result is greater than or equal to the third threshold, it is determined that the first communications device is not in the first mobility state; and
in a case in which the first communications device is in the first mobility state, the RRM measurement state is determined as a first RRM measurement state; and/or in a case in which the first communications device is not in the first mobility state, the RRM measurement state is determined as a second RRM measurement state.

In some embodiments, the second communications device transmits an RLM reference signal, where the RLM reference signal is used to determine the RLM result.

In some embodiments, the target control information includes at least one of following: a synchronization sequence, a random access preamble, cell information, beam information, information related to mobility measurement, or information related to a mobility state.

In some embodiments, at least one of the first duration and the second threshold is agreed upon by a protocol, or at least one of the first duration and the second threshold is configured by a network, or at least one of the first duration and the second threshold is determined by the first communications device.

In some embodiments, at least one of the second duration and the third threshold is agreed upon by a protocol, or at least one of the second duration and the third threshold is configured by a network, or at least one of the second duration and the third threshold is determined by the first communications device.

In some embodiments, the RLM result is obtained by the first communications device by measuring an RLM reference signal by using the primary receiver, or the RLM result is obtained by the first communications device by measuring an RLM reference signal by using the wake-up receiver.

In some embodiments, the first indication information is carried in downlink signalling, or the first indication information is carried in sidelink signalling.

Optionally, the downlink signalling may include but is not limited to at least one of following: RRC signalling, DCI, a system message, a broadcast message, or a MAC CE.

Optionally, the sidelink signalling may include but is not limited to at least one of following: PC5-RRC signalling, a sidelink MAC CE, or SCI.

In some embodiments, the first mobility state is a low-mobility state, or the first mobility state is a state in which the first communications device is not located at a cell edge.

Therefore, in embodiments of this application, the first communications device may determine the RRM measurement state based on the WUR signal or the RLM result, so that RRM measurement of the serving cell performed by the primary receiver of the first communications device can be reduced, thereby reducing energy consumption of the RRM measurement.

The foregoing describes method embodiments of this application in detail with reference to FIG. 7 to FIG. 9. The following describes apparatus embodiments of this application in detail with reference to FIG. 10 to FIG. 14. It should be understood that the apparatus embodiments correspond to the method embodiments. For similar descriptions, reference may be made to the method embodiments.

FIG. 10 is a schematic block diagram of a communications device 400 according to an embodiment of this application. The communications device 400 is a first communications device. As shown in FIG. 10, the communications device 400 includes:
a processing unit 410, configured to determine a radio resource management RRM measurement state based on first information,
where the first information is one of following:
a wake-up radio WUR signal and a radio link monitoring RLM result.

In some embodiments, the RRM measurement state includes a first RRM measurement state and a second RRM measurement state.

In the first RRM measurement state, the first communications device determines a mobility state of the first communications device by using a WUR signal; and in the second RRM measurement state, the first communications device determines the mobility state of the first communications device by using a measurement reference signal or a WUR signal.

In some embodiments, in the first RRM measurement state, when it is determined that the first communications device is not in the first mobility state, the processing unit 410 is further used to adjust the RRM measurement state to the second RRM measurement state.

In some embodiments, in the second RRM measurement state, when it is determined that the first communications device is in the first mobility state, the processing unit 410 is further configured to adjust the RRM measurement state to the first RRM measurement state.

In some embodiments, in a case in which the first information is a WUR signal, the processing unit 410 is specifically configured to:
determine the RRM measurement state based on whether target control information is detected in the WUR signal, or determine the RRM measurement state based on a measurement result for the WUR signal.

In some embodiments, the processing unit 410 is specifically configured to:
in a case in which the target control information is detected in the WUR signal, determine that the RRM measurement state is a first RRM measurement state; and/or in a case in which the target control information is not detected in the WUR signal, determine that the RRM measurement state is a second RRM measurement state.

In some embodiments, the processing unit 410 is specifically configured to:
in a case in which the target control information is detected in the WUR signal, determine, by the first communications device, that the first communications device is in a first mobility state, and in a case in which the target control information is not detected in the WUR signal, determine, by the first communications device, that the first communications device is not in the first mobility state; and
in a case in which the first communications device is in the first mobility state, determine, by the first communications device, that the RRM measurement state is a first RRM measurement state; and/or
in a case in which the first communications device is not in the first mobility state, determine, by the first communications device, that the RRM measurement state is a second RRM measurement state.

In some embodiments, the processing unit 410 is specifically configured to:
in a case in which the measurement result for the WUR signal is greater than or equal to a first threshold, determine, by the first communications device, that the RRM measurement state is a first RRM measurement state; and/or
in a case in which the measurement result for the WUR signal is less than a first threshold, determine, by the first communications device, that the RRM measurement state is a second RRM measurement state.

In some embodiments, the processing unit 410 is specifically configured to:
in a case in which the measurement result for the WUR signal is greater than or equal to a first threshold, determine, by the first communications device, that the first communications device is in a first mobility state, and in a case in which the measurement result for the WUR signal is less than the first threshold, determine, by the first communications device, that the first communications device is not in the first mobility state; and
in a case in which the first communications device is in the first mobility state, determine, by the first communications device, that the RRM measurement state is a first RRM measurement state; and/or
in a case in which the first communications device is not in the first mobility state, determine, by the first communications device, that the RRM measurement state is a second RRM measurement state.

In some embodiments, the measurement result for the WUR signal includes at least one of following:
reference signal received power RSRP, reference signal received quality RSRQ, a signal to interference plus noise ratio SINR, or a path loss.

In some embodiments, in a case in which the first information is an RLM result, the processing unit 410 is specifically configured to:
determine the RRM measurement state based on whether the RLM result indicates that a radio link failure RLF occurs, or determine the RRM measurement state based on a quantity of In Synchronization IS states within a first duration associated with the RLM result, or determine the RRM measurement state based on a quantity of Out Of Synchronization OOS states within a second duration associated with the RLM result.

In some embodiments, the processing unit 410 is specifically configured to:
in a case in which the RLM result indicates that no RLF occurs, determine, by the first communications device, that the RRM measurement state is a first RRM measurement state; and/or
in a case in which the RLM result indicates that an RLF occurs, determine, by the first communications device, that the RRM measurement state is a second RRM measurement state.

In some embodiments, the processing unit 410 is specifically configured to:
in a case in which the RLM result indicates that no RLF occurs, determine, by the first communications device, that the first communications device is in a first mobility state, and in a case in which the RLM result indicates that an RLF occurs, determine, by the first communications device, that the first communications device is not in the first mobility state; and
in a case in which the first communications device is in the first mobility state, determine, by the first communications device, that the RRM measurement state is a first RRM measurement state; and/or
in a case in which the first communications device is not in the first mobility state, determine, by the first communications device, that the RRM measurement state is a second RRM measurement state.

In some embodiments, the processing unit 410 is specifically configured to:
in a case in which the quantity of IS states within the first duration associated with the RLM result is greater than or equal to a second threshold, determine, by the first communications device, that the RRM measurement state is a first RRM measurement state; and/or
in a case in which the quantity of IS states within the first duration associated with the RLM result is less than a second threshold, determine, by the first communications device, that the RRM measurement state is a second RRM measurement state.

In some embodiments, the processing unit 410 is specifically configured to:
in a case in which the quantity of IS states within the first duration associated with the RLM result is greater than or equal to the second threshold, determine, by the first communications device, that the first communications device is in the first mobility state; and in a case in which the quantity of IS states within the first duration associated with the RLM result is less than the second threshold, determine, by the first communications device, that the first communications device is not in the first mobility state; and
in a case in which the first communications device is in the first mobility state, determine, by the first communications device, that the RRM measurement state is a first RRM measurement state; and/or
in a case in which the first communications device is not in the first mobility state, determine, by the first communications device, that the RRM measurement state is a second RRM measurement state.

In some embodiments, the processing unit 410 is specifically configured to:
in a case in which the quantity of OOS states within the second duration associated with the RLM result is less than a third threshold, determine, by the first communications device, that the RRM measurement state is a first RRM measurement state; and/or
in a case in which the quantity of OOS states within the second duration associated with the RLM result is greater than or equal to the third threshold, determine, by the first communications device, that the RRM measurement state is a second RRM measurement state.

In some embodiments, the processing unit 410 is specifically configured to:
in a case in which the quantity of OOS states within the second duration associated with the RLM result is less than a third threshold, determine, by the first communications device, that the first communications device is in a first mobility state, and in a case in which the quantity of OOS states within the second duration associated with the RLM result is greater than or equal to the third threshold, determine, by the first communications device, that the first communications device is not in the first mobility state; and
in a case in which the first communications device is in the first mobility state, determine, by the first communications device, that the RRM measurement state is a first RRM measurement state; and/or
in a case in which the first communications device is not in the first mobility state, determine, by the first communications device, that the RRM measurement state is a second RRM measurement state.

In some embodiments, in the first RRM measurement state, the first communications device stops performing RRM measurement, or the first communications device performs relaxed RRM measurement; and/or in the second RRM measurement state, the first communications device performs RRM measurement, and the RRM measurement performed by the first communications device is not relaxed.

In some embodiments, in a case in which the first communications device determines that the RRM measurement state is the first RRM measurement state, the processing unit 410 is further configured to:
in a case in which the first communications device fails to detect the target control information within a third duration, perform RRM measurement; or
in a case in which a quantity of pieces of target control information detected by the first communications device within the third duration is less than a fourth threshold, perform RRM measurement.

In some embodiments, the processing unit 410 is specifically configured to:
perform RRM measurement for a serving cell and/or a neighboring cell.

In some embodiments, in a case in which the first communications device is in the first mobility state, the processing unit 410 is further configured to determine the mobility state of the first communications device by using a WUR signal.

In some embodiments, the target control information includes at least one of following: a synchronization sequence, a random access preamble, cell information, beam information, information related to mobility measurement, or information related to a mobility state.

In some embodiments, at least one of the first duration and the second threshold is agreed upon by a protocol, or at least one of the first duration and the second threshold is configured by a network, or at least one of the first duration and the second threshold is determined by the first communications device.

In some embodiments, at least one of the second duration and the third threshold is agreed upon by a protocol, or at least one of the second duration and the third threshold is configured by a network, or at least one of the second duration and the third threshold is determined by the first communications device.

In some embodiments, at least one of the third duration and the fourth threshold is agreed upon by a protocol, or at least one of the third duration and the fourth threshold is configured by a network, or at least one of the third duration and the fourth threshold is determined by the first communications device.

In some embodiments, the RLM result is obtained by the first communications device by measuring an RLM reference signal by using the primary receiver, or the RLM result is obtained by the first communications device by measuring an RLM reference signal by using the wake-up receiver.

In some embodiments, the processing unit 410 is specifically configured to:
in a case in which the first communications device is in the first mobility state, determine the RRM measurement state based on the first information.

In some embodiments, the communications device 400 further includes a communications unit 420.
The communications unit 420 is configured to receive first indication information, where the first indication information is used to instruct the first communications device to determine the RRM measurement state based on the first information.

In some embodiments, the first indication information is carried in downlink signalling, or the first indication information is carried in sidelink signalling.

In some embodiments, the first mobility state is a low-mobility state, or the first mobility state is a state in which the first communications device is not located at a cell edge.

In some embodiments, the foregoing communications unit may be a communications interface or a transceiver, or an input/output interface of a communications chip or a system on chip. The processing unit may be one or more processors.

It should be understood that the communications device 400 according to this embodiment of this application may correspond to the first communications device in the method embodiment of this application, and the foregoing and other operations and/or functions of the units in the communications device 400 are separately used to implement corresponding processes of the first communications device in the method 200 shown in FIG. 7. For brevity, details are not described herein again.

FIG. 11 is a schematic block diagram of a communications device 500 according to an embodiment of this application. The communications device 500 is a second communications device. As shown in FIG. 11, the communications device 500 includes:
a communications unit 510, configured to transmit first indication information,
where the first indication information is used to instruct a first communications device to determine a radio resource management RRM measurement state based on first information, and the first information is one of following: a wake-up radio WUR signal and a radio link monitoring RLM result.

In some embodiments, the RRM measurement state includes a first RRM measurement state and a second RRM measurement state.

In the first RRM measurement state, the first communications device determines a mobility state of the first communications device by using a WUR signal; and in the second RRM measurement state, the first communications device determines the mobility state of the first communications device by using a measurement reference signal or a WUR signal.

In some embodiments, in the first RRM measurement state, when it is determined that the first communications device is not in the first mobility state, the RRM measurement state is adjusted from the first RRM measurement state to the second RRM measurement state.

In some embodiments, in the second RRM measurement state, when it is determined that the first communications device is in the first mobility state, the RRM measurement state is adjusted from the second RRM measurement state to the first RRM measurement state.

In some embodiments, in a case in which the first information is a WUR signal, the first communications device determines the RRM measurement state based on whether target control information is detected in the WUR signal, or the first communications device determines the RRM measurement state based on a measurement result for the WUR signal.

In some embodiments, the first communications device determining the RRM measurement state based on whether the target control information is detected in the WUR signal includes:
in a case in which the target control information is detected in the WUR signal, determine that the RRM measurement state is a first RRM measurement state; and/or in a case in which the target control information is not detected in the WUR signal, determine that the RRM measurement state is a second RRM measurement state.

In some embodiments, the first communications device determining the RRM measurement state based on whether the target control information is detected in the WUR signal includes:
in a case in which the target control information is detected in the WUR signal, it is determined that the first communications device is in a first mobility state, and in a case in which the target control information is not detected in the WUR signal, it is determined that the first communications device is not in the first mobility state; and
in a case in which the first communications device is in the first mobility state, the RRM measurement state is determined as a first RRM measurement state; and/or in a case in which the first communications device is not in the first mobility state, the RRM measurement state is determined as a second RRM measurement state.

In some embodiments, the first communications device determining the RRM measurement state based on the measurement result for the WUR signal includes:
in a case in which the measurement result for the WUR signal is greater than or equal to a first threshold, the RRM measurement state is determined as a first RRM measurement state; and/or in a case in which the measurement result for the WUR signal is less than a first threshold, the RRM measurement state is determined as a second RRM measurement state.

In some embodiments, the first communications device determining the RRM measurement state based on the measurement result for the WUR signal includes:
in a case in which the measurement result for the WUR signal is greater than or equal to a first threshold, it is determined that the first communications device is in a first mobility state, and in a case in which the measurement result for the WUR signal is less than the first threshold, it is determined that the first communications device is not in the first mobility state; and
in a case in which the first communications device is in the first mobility state, the RRM measurement state is determined as a first RRM measurement state; and/or in a case in which the first communications device is not in the first mobility state, the RRM measurement state is determined as a second RRM measurement state.

In some embodiments, the measurement result for the WUR signal includes at least one of following:
reference signal received power RSRP, reference signal received quality RSRQ, a signal to interference plus noise ratio SINR, or a path loss.

In some embodiments, the communications unit 510 is further configured to transmit the WUR signal.

In some embodiments, in a case in which the first information is the RLM result, the first communications device determines the RRM measurement state based on whether the RLM result indicates that a radio link failure RLF occurs, or the first communications device determines the RRM measurement state based on a quantity of In Synchronization IS states within a first duration associated with the RLM result, or the first communications device determines the RRM measurement state based on a quantity of Out Of Synchronization OOS states within a second duration associated with the RLM result.

In some embodiments, the first communications device determines the RRM measurement state based on whether the RLM result indicates that an RLF occurs includes:
in a case in which the RLM result indicates that no RLF occurs, the RRM measurement state is determined as a first RRM measurement state; and/or
in a case in which the RLM result indicates that an RLF occurs, the RRM measurement state is determined as a second RRM measurement state.

In some embodiments, the first communications device determines the RRM measurement state based on whether the RLM result indicates that an RLF occurs includes:
in a case in which the RLM result indicates that no RLF occurs, it is determined that the first communications device is in a first mobility state, and in a case in which the RLM result indicates that an RLF occurs, it is determined that the first communications device is not in the first mobility state; and
in a case in which the first communications device is in the first mobility state, the RRM measurement state is determined as a first RRM measurement state; and/or in a case in which the first communications device is not in the first mobility state, the RRM measurement state is determined as a second RRM measurement state.

In some embodiments, the first communications device determining the RRM measurement state based on the quantity of IS states within the first duration associated with the RLM result includes:
in a case in which the quantity of IS states within the first duration associated with the RLM result is greater than or equal to a second threshold, the RRM measurement state is determined as a first RRM measurement state; and/or in a case in which the quantity of IS states within the first duration associated with the RLM result is less than a second threshold, the RRM measurement state is determined as a second RRM measurement state.

In some embodiments, the first communications device determining the RRM measurement state based on the quantity of IS states within the first duration associated with the RLM result includes:
in a case in which the quantity of IS states within the first duration associated with the RLM result is greater than or equal to a second threshold, it is determined that the first communications device is in a first mobility state, and in a case in which the quantity of IS states within the first duration associated with the RLM result is less than the second threshold, it is determined that the first communications device is not in the first mobility state; and
in a case in which the first communications device is in the first mobility state, the RRM measurement state is determined as a first RRM measurement state; and/or in a case in which the first communications device is not in the first mobility state, the RRM measurement state is determined as a second RRM measurement state.

In some embodiments, the first communications device determining the RRM measurement state based on the quantity of OOS states within the second duration associated with the RLM result includes:
in a case in which the quantity of OOS states within the second duration associated with the RLM result is less than a third threshold, the RRM measurement state is determined as a first RRM measurement state; and/or in a case in which the quantity of OOS states within the second duration associated with the RLM result is greater than or equal to the third threshold, the RRM measurement state is determined as a second RRM measurement state.

In some embodiments, the first communications device determining the RRM measurement state based on the quantity of OOS states within the second duration associated with the RLM result includes:
in a case in which the quantity of OOS states within the second duration associated with the RLM result is less than a third threshold, it is determined that the first communications device is in a first mobility state, and in a case in which the quantity of OOS states within the second duration associated with the RLM result is greater than or equal to the third threshold, it is determined that the first communications device is not in the first mobility state; and
in a case in which the first communications device is in the first mobility state, the RRM measurement state is determined as a first RRM measurement state; and/or in a case in which the first communications device is not in the first mobility state, the RRM measurement state is determined as a second RRM measurement state.

In some embodiments, the communications unit 510 is further configured to transmit an RLM reference signal, where the RLM reference signal is used to determine the RLM result.

In some embodiments, in the first RRM measurement state, the first communications device stops performing RRM measurement, or the first communications device performs relaxed RRM measurement; and/or
in the second RRM measurement state, the first communications device performs RRM measurement, and the RRM measurement performed by the first communications device is not relaxed.

In some embodiments, the target control information includes at least one of following: a synchronization sequence, a random access preamble, cell information, beam information, information related to mobility measurement, or information related to a mobility state.

In some embodiments, at least one of the first duration and the second threshold is agreed upon by a protocol, or at least one the first duration and the second threshold is configured by a network, or at least one of the first duration and the second threshold is determined by the first communications device.

In some embodiments, at least one the second duration and the third threshold is agreed upon by a protocol, or at least one of the second duration and the third threshold is configured by a network, or at least one of the second duration and the third threshold is determined by the first communications device.

In some embodiments, the RLM result is obtained by the first communications device by measuring an RLM reference signal by using the primary receiver, or the RLM result is obtained by the first communications device by measuring an RLM reference signal by using the wake-up receiver.

In some embodiments, the first indication information is carried in downlink signalling, or the first indication information is carried in sidelink signalling.

In some embodiments, the first mobility state is a low-mobility state, or the first mobility state is a state in which the first communications device is not located at a cell edge.

In some embodiments, the foregoing communications unit may be a communications interface or a transceiver, or an input/output interface of a communications chip or a system on chip. The processing unit may be one or more processors.

It should be understood that the communications device 500 according to this embodiment of this application may correspond to the second communications device in the method embodiment of this application, and the foregoing and other operations and/or functions of the units in the communications device 500 are separately used to implement corresponding processes of the second communications device in the method 300 shown in FIG. 9. For brevity, details are not described herein again.

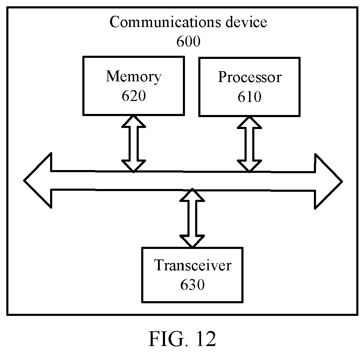

FIG. 12 is a schematic structural diagram of a communications device 600 according to an embodiment of this application. The communications device 600 shown in FIG. 12 includes a processor 610, and the processor 610 may invoke a computer program from a memory and run the computer program to implement the method in embodiments of this application.

In some embodiments, as shown in FIG. 12, the communications device 600 may further include a memory 620. The processor 610 may invoke a computer program from the memory 620 and run the computer program to implement the method in embodiments of this application.

The memory 620 may be a separate component independent of the processor 610, or may be integrated into the processor 610.

In some embodiments, as shown in FIG. 12, the communications device 600 may further include a transceiver 630. The processor 610 may control the transceiver 630 to communicate with another device. Specifically, the processor may transmit information or data to the another device, or receive information or data transmitted by the another device.

The transceiver 630 may include a transmitter and a receiver (including a primary receiver and a wake-up receiver). The transceiver 630 may further include an antenna, and there may be one or more antennas.

In some embodiments, the processor 610 may implement a function of a processing unit in the communications device. For brevity, details are not described herein again.

In some embodiments, the transceiver 630 may implement a function of a communications unit in the communications device. For brevity, details are not described herein again.

In some embodiments, the communications device 600 may be specifically the communications device in embodiments of this application, and the communications device 600 may implement corresponding processes implemented by the first communications device in methods in embodiments of this application. For brevity, details are not described herein again.

In some embodiments, the communications device 600 may be specifically the communications device in embodiments of this application, and the communications device 600 may implement corresponding processes implemented by the second communications device in methods in embodiments of this application. For brevity, details are not described herein again.

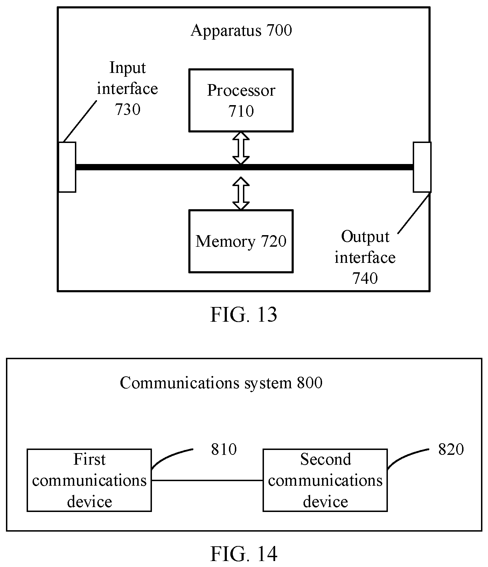

FIG. 13 is a schematic structural diagram of an apparatus according to an embodiment of this application. The apparatus 700 shown in FIG. 13 includes a processor 710, and the processor 710 may invoke a computer program from a memory and run the computer program to implement the method in embodiments of this application.

In some embodiments, as shown in FIG. 13, the apparatus 700 may further include a memory 720. The processor 710 may invoke a computer program from the memory 720 and run the computer program to implement the method in embodiments of this application.

The memory 720 may be a separate component independent of the processor 710, or may be integrated into the processor 710.

In some embodiments, the apparatus 700 may further include an input interface 730. The processor 710 may control the input interface 730 to communicate with another device or chip, and specifically, may obtain information or data transmitted by the another device or chip. Optionally, the processor 710 may be located inside or outside of a chip.

In some embodiments, the processor 710 may implement a function of a processing unit in the communications device. For brevity, details are not described herein again.

In some embodiments, the input interface 730 may implement a function of a communications unit in the communications device. Optionally, the input interface 730 may be an interface of a primary receiver, or may be an interface of a wake-up receiver.

In some embodiments, the apparatus 700 may further include an output interface 740. The processor 710 may control the output interface 740 to communicate with another device or chip, and specifically, may output information or data to the another device or chip. Optionally, the processor 710 may be located inside or outside of a chip.

In some embodiments, the output interface 740 may implement a function of a communications unit in the communications device.

In some embodiments, the apparatus may be applied to the communications device in embodiments of this application; and the apparatus may implement corresponding processes implemented by the first communications device in methods in the embodiments of this application. For brevity, details are not described herein again.

In some embodiments, the apparatus may be applied to the communications device in embodiments of this application; and the apparatus may implement corresponding processes implemented by the second communications device in methods in the embodiments of this application. For brevity, details are not described herein again.

In some embodiments, the apparatus mentioned in embodiments of this application may alternatively be a chip, for example, may be a system-level chip, a system chip, a chip system, or a system-on-chip, or the like.

FIG. 14 is a schematic block diagram of a communications system 800 according to an embodiment of this application. As shown in FIG. 14, the communications system 800 includes a first communications device 810 and a second communications device 820.

The first communications device 810 may be configured to implement corresponding functions implemented by the first communications device described in the foregoing method, and the second communications device 820 may be configured to implement corresponding functions implemented by the second communications device described in the foregoing method. For brevity, details are not described herein again.

It should be understood that, a processor in embodiments of this application may be an integrated circuit chip having a signal processing capability. In an implementation process, the steps in the foregoing method embodiments may be performed by using an integrated logic circuit of hardware of the processor or instructions in a software form. The processor may be a general-purpose processor, a digital signal processor (Digital Signal Processor, DSP), an application-specific integrated circuit (Application Specific Integrated Circuit, ASIC), a field-programmable gate array (Field Programmable Gate Array, FPGA) or another programmable logic device, a discrete gate or a transistor logic device, or a discrete hardware component. The methods, the steps, and logical block diagrams that are disclosed in embodiments of this application may be implemented or performed. The general-purpose processor may be a microprocessor, or the processor may be any conventional processor or the like. The steps of methods disclosed with reference to embodiments of this application may be directly executed by a hardware decoding processor, or may be executed by a combination of hardware and software modules in a decoding processor. The software module may be located in a mature storage medium in the art, such as a random access memory, a flash memory, a read-only memory, a programmable read-only memory, an electrically erasable programmable memory, or a register. The storage medium is located in the memory. The processor reads information in the memory and completes the steps of the foregoing methods in combination with hardware thereof.

It may be understood that, in embodiments of this application, the memory may be a volatile memory or a non-volatile memory, or may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), and is used as an external cache. By way of example but not limitative description, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct Rambus random access memory (Direct Rambus RAM, DR RAM). It should be noted that the memories in the systems and the methods described in this specification include but are not limited to these and any memory of another appropriate type.

It should be understood that, by way of example but not limitative description, for example, the memory in this embodiment of the this application may alternatively be a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synch link DRAM, SLDRAM), a direct Rambus random access memory (Direct Rambus RAM, DR RAM), or the like. In other words, the memory in embodiments of this application includes but is not limited to these memories and any other proper types of memories.

An embodiment of this application further provides a computer-readable storage medium, configured to store a computer program.

In some embodiments, the computer-readable storage medium may be applied to the communications device in embodiments of this application, and the computer program causes a computer to execute corresponding processes implemented by the first communications device in methods in embodiments of this application. For brevity, details are not described herein again.

In some embodiments, the computer-readable storage medium may be applied to the communications device in embodiments of this application, and the computer program causes a computer to execute corresponding processes implemented by the second communications device in methods in embodiments of this application. For brevity, details are not described herein again.

An embodiment of this application further provides a computer program product, including computer program instructions.

In some embodiments, the computer program product may be applied to the communications device in embodiments of this application, and the computer program instructions cause a computer to execute corresponding processes implemented by the first communications device in methods in embodiments of this application. For brevity, details are not described herein again.

In some embodiments, the computer program product may be applied to the communications device in embodiments of this application, and the computer program instructions cause a computer to execute corresponding processes implemented by the second communications device in methods in embodiments of this application. For brevity, details are not described herein again.

An embodiment of this application further provides a computer program.

In some embodiments, the computer program may be applied to the communications device in embodiments of this application. The computer program, when runs on a computer, causes the computer to execute corresponding processes implemented by the first communications device in methods in embodiments of this application. For brevity, details are not described herein again.

In some embodiments, the computer program may be applied to the communications device in embodiments of this application. The computer program, when runs on a computer, causes the computer to execute corresponding processes implemented by the second communications device in methods in embodiments of this application. For brevity, details are not described herein again.

A person of ordinary skill in the art may be aware that, units and algorithm steps in examples described in combination with embodiments disclosed in this specification can be implemented by electronic hardware or a combination of computer software and electronic hardware. Whether the functions are executed by hardware or software depends on particular applications and design constraints of the technical solutions. A person skilled in the art may use different methods to implement the described functions for each specific application, but it should not be considered that the implementation goes beyond the scope of this application.

A person skilled in the art can clearly understand that, for convenience and brevity of description, reference may be made to corresponding processes in the foregoing method embodiment for specific working processes of the foregoing systems, apparatuses, and units. Details are not described herein again.

In several embodiments provided in this application, it should be understood that the disclosed system, apparatus, and method may be implemented in other manners. For example, the described apparatus embodiments are merely examples. For example, the unit division is merely logical function division and may be other division in actual implementation. For example, a plurality of units or components may be combined or integrated into another system, or some features may be ignored or not executed. In addition, the displayed or discussed mutual couplings or direct couplings or communication connections may be implemented as indirect couplings or communication connections through some interfaces, apparatuses or units, and may be implemented in electrical, mechanical, or other forms.

The units described as separate parts may be or may not be physically separate, and parts displayed as units may be or may not be physical units, and may be at one location, or may be distributed on a plurality of network elements. Some or all of the units may be selected according to actual requirements to achieve the objective of the solutions of embodiments.

In addition, functional units in embodiments of this application may be integrated into one processing unit, or each of the units may exist alone physically, or two or more units may be integrated into one unit.

When the functions are implemented in a form of a software function unit and sold or used as an independent product, the functions may be stored in a computer-readable storage medium. For such understanding, the technical solutions in embodiments of this application essentially, or the part contributing to the prior art, or some of the technical solutions may be implemented in a form of a software product. The computer software product is stored in a storage medium and includes several instructions for instructing a computer device (which may be a personal computer, a server, a network device, or the like) to execute all or some of the steps of the methods in embodiments of this application. The foregoing storage medium includes various media that may store a program code, such as a USB flash drive, a removable hard disk, a read-only memory (Read-only Memory, ROM), a random access memory (Random Access Memory, RAM), a magnetic disk, or an optical disk.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application should be subject to the protection scope of the claims.

## Claims

1. A wireless communication method, comprising:
determining, by a first communications device, a radio resource management RRM measurement state based on first information,
wherein the first information is one of following:
a wake-up radio WUR signal and a radio link monitoring RLM result.

2. The method according to claim 1, wherein
the RRM measurement state comprises a first RRM measurement state and a second RRM measurement state,
wherein in the first RRM measurement state, the first communications device determines a mobility state of the first communications device by using a WUR signal; and in the second RRM measurement state, the first communications device determines the mobility state of the first communications device by using a measurement reference signal or a WUR signal.

3. The method according to claim 2, wherein
in the first RRM measurement state, the method further comprises:
when it is determined that the first communications device is not in a first mobility state, adjusting, by the first communications device, the RRM measurement state to the second RRM measurement state.

4. The method according to claim 2, wherein
in the second RRM measurement state, the method further comprises:
when it is determined that the first communications device is in a first mobility state, adjusting, by the first communications device, the RRM measurement state to the first RRM measurement state.

5. The method according to any one of claims 1 to 4, wherein in a case in which the first information is a WUR signal, the determining, by a first communications device, an RRM measurement state based on first information comprises:
determining, by the first communications device, the RRM measurement state based on whether target control information is detected in the WUR signal, or determining, by the first communications device, the RRM measurement state based on a measurement result for the WUR signal.

6. The method according to claim 5, wherein the determining, by the first communications device, the RRM measurement state based on whether target control information is detected in the WUR signal comprises:
in a case in which the target control information is detected in the WUR signal, determining, by the first communications device, that the RRM measurement state is a first RRM measurement state; and/or
in a case in which the target control information is not detected in the WUR signal, determining, by the first communications device, that the RRM measurement state is a second RRM measurement state.

7. The method according to claim 5, wherein the determining, by the first communications device, the RRM measurement state based on whether target control information is detected in the WUR signal comprises:
in a case in which the target control information is detected in the WUR signal, determining, by the first communications device, that the first communications device is in a first mobility state, and in a case in which the target control information is not detected in the WUR signal, determining, by the first communications device, that the first communications device is not in the first mobility state; and
in a case in which the first communications device is in the first mobility state, determining, by the first communications device, that the RRM measurement state is a first RRM measurement state; and/or
in a case in which the first communications device is not in the first mobility state, determining, by the first communications device, that the RRM measurement state is a second RRM measurement state.

8. The method according to claim 5, wherein the determining, by the first communications device, the RRM measurement state based on a measurement result for the WUR signal comprises:
in a case in which the measurement result for the WUR signal is greater than or equal to a first threshold, determining, by the first communications device, that the RRM measurement state is a first RRM measurement state; and/or
in a case in which the measurement result for the WUR signal is less than a first threshold, determining, by the first communications device, that the RRM measurement state is a second RRM measurement state.

9. The method according to claim 5, wherein the determining, by the first communications device, the RRM measurement state based on a measurement result for the WUR signal comprises:
in a case in which the measurement result for the WUR signal is greater than or equal to a first threshold, determining, by the first communications device, that the first communications device is in a first mobility state, and in a case in which the measurement result for the WUR signal is less than the first threshold, determining, by the first communications device, that the first communications device is not in the first mobility state; and
in a case in which the first communications device is in the first mobility state, determining, by the first communications device, that the RRM measurement state is a first RRM measurement state; and/or
in a case in which the first communications device is not in the first mobility state, determining, by the first communications device, that the RRM measurement state is a second RRM measurement state.

10. The method according to claim 5, 8, or 9, wherein
the measurement result for the WUR signal comprises at least one of following:
reference signal received power RSRP, reference signal received quality RSRQ, a signal to interference plus noise ratio SINR, or a path loss.

11. The method according to any one of claims 1 to 4, wherein in a case in which the first information is an RLM result, the determining, by a first communications device, an RRM measurement state based on first information comprises:
determining, by the first communications device, the RRM measurement state based on whether the RLM result indicates that a radio link failure RLF occurs, or determining, by the first communications device, the RRM measurement state based on a quantity of In Synchronization IS states within a first duration associated with the RLM result, or determining, by the first communications device, the RRM measurement state based on a quantity of Out Of Synchronization OOS states within a second duration associated with the RLM result.

12. The method according to claim 11, wherein the determining, by the first communications device, the RRM measurement state based on whether the RLM result indicates that an RLF occurs comprises:
in a case in which the RLM result indicates that no RLF occurs, determining, by the first communications device, that the RRM measurement state is a first RRM measurement state; and/or
in a case in which the RLM result indicates that an RLF occurs, determining, by the first communications device, that the RRM measurement state is a second RRM measurement state.

13. The method according to claim 11, wherein the determining, by the first communications device, the RRM measurement state based on whether the RLM result indicates that an RLF occurs comprises:
in a case in which the RLM result indicates that no RLF occurs, determining, by the first communications device, that the first communications device is in a first mobility state, and in a case in which the RLM result indicates that an RLF occurs, determining, by the first communications device, that the first communications device is not in the first mobility state; and
in a case in which the first communications device is in the first mobility state, determining, by the first communications device, that the RRM measurement state is a first RRM measurement state; and/or
in a case in which the first communications device is not in the first mobility state, determining, by the first communications device, that the RRM measurement state is a second RRM measurement state.

14. The method according to claim 11, wherein the determining, by the first communications device, the RRM measurement state based on a quantity of IS states within a first duration associated with the RLM result comprises:
in a case in which the quantity of IS states within the first duration associated with the RLM result is greater than or equal to a second threshold, determining, by the first communications device, that the RRM measurement state is a first RRM measurement state; and/or
in a case in which the quantity of IS states within the first duration associated with the RLM result is less than a second threshold, determining, by the first communications device, that the RRM measurement state is a second RRM measurement state.

15. The method according to claim 11, wherein the determining, by the first communications device, the RRM measurement state based on a quantity of IS states within a first duration associated with the RLM result comprises:
in a case in which the quantity of IS states within the first duration associated with the RLM result is greater than or equal to a second threshold, determining, by the first communications device, that the first communications device is in a first mobility state, and in a case in which the quantity of IS states within the first duration associated with the RLM result is less than the second threshold, determining, by the first communications device, that the first communications device is not in the first mobility state; and
in a case in which the first communications device is in the first mobility state, determining, by the first communications device, that the RRM measurement state is a first RRM measurement state; and/or
in a case in which the first communications device is not in the first mobility state, determining, by the first communications device, that the RRM measurement state is a second RRM measurement state.

16. The method according to claim 11, wherein the determining, by the first communications device, the RRM measurement state based on a quantity of OOS states within a second duration associated with the RLM result comprises:
in a case in which the quantity of OOS states within the second duration associated with the RLM result is less than a third threshold, determining, by the first communications device, that the RRM measurement state is a first RRM measurement state; and/or
in a case in which the quantity of OOS states within the second duration associated with the RLM result is greater than or equal to the third threshold, determining, by the first communications device, that the RRM measurement state is a second RRM measurement state.

17. The method according to claim 11, wherein the determining, by the first communications device, the RRM measurement state based on a quantity of OOS states within a second duration associated with the RLM result comprises:
in a case in which the quantity of OOS states within the second duration associated with the RLM result is less than a third threshold, determining, by the first communications device, that the first communications device is in a first mobility state, and in a case in which the quantity of OOS states within the second duration associated with the RLM result is greater than or equal to the third threshold, determining, by the first communications device, that the first communications device is not in the first mobility state; and
in a case in which the first communications device is in the first mobility state, determining, by the first communications device, that the RRM measurement state is a first RRM measurement state; and/or
in a case in which the first communications device is not in the first mobility state, determining, by the first communications device, that the RRM measurement state is a second RRM measurement state.

18. The method according to any one of claims 6 to 9 and claims 12 to 17, wherein
in the first RRM measurement state, the first communications device stops performing RRM measurement, or the first communications device performs relaxed RRM measurement; and/or
in the second RRM measurement state, the first communications device performs RRM measurement, and the RRM measurement performed by the first communications device is not relaxed.

19. The method according to any one of claims 6 to 9 and claims 12 to 18, wherein in a case in which the first communications device determines that the RRM measurement state is the first RRM measurement state, the method further comprises:
in a case in which the first communications device fails to detect the target control information within a third duration, performing, by the first communications device, RRM measurement; or
in a case in which a quantity of pieces of target control information detected by the first communications device within the third duration is less than a fourth threshold, performing, by the first communications device, RRM measurement.

20. The method according to claim 19, wherein the performing, by the first communications device, RRM measurement comprises:
performing, by the first communications device, RRM measurement for a serving cell and/or a neighboring cell.

21. The method according to claim 20, wherein the method further comprises:
in a case in which the first communications device is in a first mobility state, determining, by the first communications device, a mobility state of the first communications device by using a WUR signal.

22. The method according to any one of claims 5 to 7 and claims 19 to 21, wherein
the target control information comprises at least one of following: a synchronization sequence, a random access preamble, cell information, beam information, information related to mobility measurement, or information related to a mobility state.

23. The method according to claim 14 or 15, wherein
at least one of the first duration and the second threshold is agreed upon by a protocol, or at least one of the first duration and the second threshold is configured by a network, or at least one of the first duration and the second threshold is determined by the first communications device.

24. The method according to claim 16 or 17, wherein
at least one of the second duration and the third threshold is agreed upon by a protocol, or at least one of the second duration and the third threshold is configured by a network, or at least one of the second duration and the third threshold is determined by the first communications device.

25. The method according to any one of claims 19 to 21, wherein
at least one of the third duration and the fourth threshold is agreed upon by a protocol, or at least one of the third duration and the fourth threshold is configured by a network, or at least one of the third duration and the fourth threshold is determined by the first communications device.

26. The method according to any one of claims 1 to 25, wherein
the RLM result is obtained by the first communications device by measuring an RLM reference signal through a primary receiver, or the RLM result is obtained by the first communications device by measuring an RLM reference signal through a wake-up receiver.

27. The method according to any one of claims 1 to 26, wherein the determining, by a first communications device, an RRM measurement state based on first information comprises:
in a case in which the first communications device is in a first mobility state, determining, by the first communications device, the RRM measurement state based on the first information.

28. The method according to any one of claims 1 to 26, wherein the method further comprises:
receiving, by the first communications device, first indication information, wherein the first indication information is used to instruct the first communications device to determine the RRM measurement state based on the first information.

29. The method according to claim 28, wherein
the first indication information is carried in downlink signalling, or the first indication information is carried in sidelink signalling.

30. The method according to claim 3, 4, 7, 9, 13, 15, 17, 21, or 27, wherein
the first mobility state is a low-mobility state, or the first mobility state is a state in which the first communications device is not located at a cell edge.

31. A wireless communication method, comprising:
transmitting, by a second communications device, first indication information,
wherein the first indication information is used to instruct a first communications device to determine a radio resource management RRM measurement state based on first information, and the first information is one of following: a wake-up radio WUR signal and a radio link monitoring RLM result.

32. The method according to claim 31, wherein
the RRM measurement state comprises a first RRM measurement state and a second RRM measurement state,
wherein in the first RRM measurement state, the first communications device determines a mobility state of the first communications device by using a WUR signal; and in the second RRM measurement state, the first communications device determines the mobility state of the first communications device by using a measurement reference signal or a WUR signal.

33. The method according to claim 32, wherein
in the first RRM measurement state, when it is determined that the first communications device is not in a first mobility state, the RRM measurement state is adjusted from the first RRM measurement state to the second RRM measurement state.

34. The method according to claim 32, wherein
in the second RRM measurement state, when it is determined that the first communications device is in a first mobility state, the RRM measurement state is adjusted from the second RRM measurement state to the first RRM measurement state.

35. The method according to any one of claims 31 to 34, wherein in a case in which the first information is a WUR signal, the first communications device determines the RRM measurement state based on whether target control information is detected in the WUR signal, or the first communications device determines the RRM measurement state based on a measurement result for the WUR signal.

36. The method according to claim 35, wherein the first communications device determining the RRM measurement state based on whether target control information is detected in the WUR signal comprises:
in a case in which the target control information is detected in the WUR signal, the RRM measurement state is determined as a first RRM measurement state; and/or in a case in which the target control information is not detected in the WUR signal, the RRM measurement state is determined as a second RRM measurement state.

37. The method according to claim 35, wherein the first communications device determining the RRM measurement state based on whether target control information is detected in the WUR signal comprises:
in a case in which the target control information is detected in the WUR signal, it is determined that the first communications device is in a first mobility state, and in a case in which the target control information is not detected in the WUR signal, it is determined that the first communications device is not in the first mobility state; and
in a case in which the first communications device is in the first mobility state, the RRM measurement state is determined as a first RRM measurement state; and/or in a case in which the first communications device is not in the first mobility state, the RRM measurement state is determined as a second RRM measurement state.

38. The method according to claim 35, wherein the first communications device determining the RRM measurement state based on a measurement result for the WUR signal comprises:
in a case in which the measurement result for the WUR signal is greater than or equal to a first threshold, the RRM measurement state is determined as a first RRM measurement state; and/or in a case in which the measurement result for the WUR signal is less than a first threshold, the RRM measurement state is determined as a second RRM measurement state.

39. The method according to claim 35, wherein the first communications device determining the RRM measurement state based on a measurement result for the WUR signal comprises:
in a case in which the measurement result for the WUR signal is greater than or equal to a first threshold, it is determined that the first communications device in a first mobility state, and in a case in which the measurement result for the WUR signal is less than the first threshold, it is determined that the first communications device is not in the first mobility state; and
in a case in which the first communications device is in the first mobility state, the RRM measurement state is determined as a first RRM measurement state; and/or in a case in which the first communications device is not in the first mobility state, the RRM measurement state is determined as a second RRM measurement state.

40. The method according to claim 35, 38, or 39, wherein
the measurement result for the WUR signal comprises at least one of following:
reference signal received power RSRP, reference signal received quality RSRQ, a signal to interference plus noise ratio SINR, or a path loss.

41. The method according to any one of claims 35 to 40, further comprising:
transmitting, by the second communications device, the WUR signal.

42. The method according to any one of claims 31 to 34, wherein in a case in which the first information is an RLM result, the first communications device determines the RRM measurement state based on whether the RLM result indicates that a radio link failure RLF occurs , or the first communications device determines the RRM measurement state based on a quantity of In Synchronization IS states within a first duration associated with the RLM result, or the first communications device determines the RRM measurement state based on a quantity of Out Of Synchronization OOS states within a second duration associated with the RLM result.

43. The method according to claim 42, wherein the first communications device determining the RRM measurement state based on whether the RLM result indicates that an RLF occurs comprises:
in a case in which the RLM result indicates that no RLF occurs, the RRM measurement state is determined as a first RRM measurement state; and/or
in a case in which the RLM result indicates that an RLF occurs, the RRM measurement state is determined as a second RRM measurement state.

44. The method according to claim 42, wherein the first communications device determining the RRM measurement state based on whether the RLM result indicates that an RLF occurs comprises:
in a case in which the RLM result indicates that no RLF occurs, it is determined that the first communications device is in a first mobility state, and in a case in which the RLM result indicates that an RLF occurs, it is determined that the first communications device is not in the first mobility state; and
in a case in which the first communications device is in the first mobility state, the RRM measurement state is determined as a first RRM measurement state; and/or in a case in which the first communications device is not in the first mobility state, the RRM measurement state is determined as a second RRM measurement state.

45. The method according to claim 42, wherein the first communications device determining the RRM measurement state based on a quantity of IS states within a first duration associated with the RLM result comprises:
in a case in which the quantity of IS states within the first duration associated with the RLM result is greater than or equal to a second threshold, the RRM measurement state is determined as a first RRM measurement state; and/or in a case in which the quantity of IS states within the first duration associated with the RLM result is less than a second threshold, the RRM measurement state is determined as a second RRM measurement state.

46. The method according to claim 42, wherein the first communications device determining the RRM measurement state based on a quantity of IS states within a first duration associated with the RLM result comprises:
in a case in which the quantity of IS states within the first duration associated with the RLM result is greater than or equal to a second threshold, it is determined that the first communications device is in a first mobility state, and in a case in which the quantity of IS states within the first duration associated with the RLM result is less than the second threshold, it is determined that the first communications device is not in the first mobility state; and
in a case in which the first communications device is in the first mobility state, the RRM measurement state is determined as a first RRM measurement state; and/or in a case in which the first communications device is not in the first mobility state, the RRM measurement state is determined as a second RRM measurement state.

47. The method according to claim 42, wherein the first communications device determining the RRM measurement state based on a quantity of OOS states within a second duration associated with the RLM result comprises:
in a case in which the quantity of OOS states within the second duration associated with the RLM result is less than a third threshold, the RRM measurement state is determined as a first RRM measurement state; and/or in a case in which the quantity of OOS states within the second duration associated with the RLM result is greater than or equal to the third threshold, the RRM measurement state is determined as a second RRM measurement state.

48. The method according to claim 42, wherein the first communications device determining the RRM measurement state based on a quantity of OOS states within a second duration associated with the RLM result comprises:
in a case in which the quantity of OOS states within the second duration associated with the RLM result is less than a third threshold, it is determined that the first communications device is in a first mobility state, and in a case in which the quantity of OOS states within the second duration associated with the RLM result is greater than or equal to the third threshold, it is determined that the first communications device is not in the first mobility state; and
in a case in which the first communications device is in the first mobility state, the RRM measurement state is determined as a first RRM measurement state; and/or in a case in which the first communications device is not in the first mobility state, the RRM measurement state is determined as a second RRM measurement state.

49. The method according to any one of claims 42 to 48, wherein the method further comprises:
transmitting, by the second communications device, an RLM reference signal, wherein the RLM reference signal is used to determine the RLM result.

50. The method according to any one of claims 36 to 39 and claims 43 to 48, wherein
in the first RRM measurement state, the first communications device stops performing RRM measurement, or the first communications device performs relaxed RRM measurement; and/or
in the second RRM measurement state, the first communications device performs RRM measurement, and the RRM measurement performed by the first communications device is not relaxed.

51. The method according to any one of claims 35 to 37, wherein
the target control information comprises at least one of following: a synchronization sequence, a random access preamble, cell information, beam information, information related to mobility measurement, or information related to a mobility state.

52. The method according to claim 45 or 46, wherein
at least one of the first duration and the second threshold is agreed upon by a protocol, or at least one of the first duration and the second threshold is configured by a network, or at least one of the first duration and the second threshold is determined by the first communications device.

53. The method according to claim 47 or 48, wherein
at least one of the second duration and the third threshold is agreed upon by a protocol, or at least one of the second duration and the third thresholdis configured by a network, or at least one of the second duration and the third threshold is determined by the first communications device.

54. The method according to any one of claims 31 to 53, wherein
the RLM result is obtained by the first communications device by measuring an RLM reference signal through a primary receiver, or the RLM result is obtained by the first communications device by measuring an RLM reference signal through a wake-up receiver.

55. The method according to any one of claims 31 to 54, wherein
the first indication information is carried in downlink signalling, or the first indication information is carried in sidelink signalling.

56. The method according to claim 33, 34, 37, 39, 44, 46, or 48, wherein
the first mobility state is a low-mobility state, or the first mobility state is a state in which the first communications device is not located at a cell edge.

57. A communications device, wherein the communications device is a first communications device, and the communications device comprises:
a processing unit, configured to determine a radio resource management RRM measurement state based on first information,
wherein the first information is one of following:
a wake-up radio WUR signal and a radio link monitoring RLM result.

58. A communications device, wherein the communications device is a second communications device, and the communications device comprises:
a communications unit, configured to transmit first indication information,
wherein the first indication information is used to instruct a first communications device to determine a radio resource management RRM measurement state based on first information, and the first information is one of following: a wake-up radio WUR signal and a radio link monitoring RLM result.

59. A communications device, comprising a processor and a memory, wherein the memory is configured to store a computer program, and the processor is configured to invoke and run the computer program stored in the memory to cause the communications device to execute the method according to any one of claims 1 to 30.

60. A communications device, comprising a processor and a memory, wherein the memory is configured to store a computer program, and the processor is configured to invoke and run the computer program stored in the memory to cause the communications device to execute the method according to any one of claims 31 to 56.

61. A chip, comprising a processor, configured to invoke a computer program from a memory and run the computer program, to cause a device on which the chip is installed to execute the method according to any one of claims 1 to 30.

62. A chip, comprising a processor, configured to invoke a computer program from a memory and run the computer program, to cause a device on which the chip is installed to execute the method according to any one of claims 31 to 56.

63. A computer-readable storage medium, configured to store a computer program, wherein the computer program, when executed, causes the method according to any one of claims 1 to 30 to be implemented.

64. A computer-readable storage medium, configured to store a computer program, wherein the computer program, when executed, causes the method according to any one of claims 31 to 56 to be implemented.

65. A computer program product, comprising computer program instructions, wherein the computer program instructions, when executed, cause the method according to any one of claims 1 to 30 to be implemented.

66. A computer program product, comprising computer program instructions, wherein the computer program instructions, when executed, cause the method according to any one of claims 31 to 56 to be implemented.

67. A computer program, wherein the computer program, when executed, causes the method according to any one of claims 1 to 30 to be implemented.

68. A computer program, wherein the computer program, when executed, causes the method according to any one of claims 31 to 56 to be implemented.
